# EUROPEAN PATENT SPECIFICATION

(11) **EP 4 069 500 B1**
(45) Date of publication and mention of the grant of the patent: **23.08.2023**
(21) Application number: 20816633.0
(22) Date of filing: 26.11.2020
(51) Int. Cl.: B29D 30/00, B29D 30/26, B29D 30/20

(54) **METHOD AND PLANT FOR BUILDING TYRES FOR VEHICLE WHEELS**
VERFAHREN UND ANLAGE ZUR HERSTELLUNG VON REIFEN FÜR FAHRZEUGRÄDER
PROCÉDÉ ET INSTALLATION DE FABRICATION DE PNEUS POUR ROUES DE VÉHICULES

(30) Priority: 03.12.2019 IT 201900022836
(43) Date of publication of application: 12.10.2022
(73) Proprietor: Pirelli Tyre S.p.A., 20126 Milano (IT)
(72) Inventor: PORTINARI, Gianni Enrico, 20126 Milano (IT); DE COL, Christian, 20126 Milano (IT); TESTI, Stefano, 20126 Milano (IT)
(74) Representative: Vittorangeli, Lucia
(86) International application number: PCT/IB2020/061182
(87) International publication number: WO 2021/111258

(56) References cited:
- WO-A1-2012/146988
- WO-A1-2016/075576
- GB-A- 2 030 106

## Description

The object of the present invention is a method and a plant for building tyres for vehicle wheels.

A tyre for vehicle wheels generally comprises a carcass structure comprising at least one carcass ply having respectively opposite ends engaged with respective annular anchoring structures, integrated in the zones normally identified with the name "beads", having an internal diameter substantially corresponding to a so-called "fitting diameter" of the tyre on a respective mounting rim.

An airtight covering layer, normally termed "liner", can cover the inner surfaces of the carcass structure and hence of the tyre.

The carcass structure is associated with a belt structure which can comprise one or more belt layers, situated in radial superimposition with respect to each other and with respect to the carcass ply, having textile or metallic reinforcement cords with cross orientation and/or orientation substantially parallel to the circumferential extension direction of the tyre (at 0 degrees). In radially outer position with respect to the belt structure, a tread band is applied, also made of elastomeric material like other semifinished product constituents of the tyre.

Longitudinal and transverse slots are typically shaped on the tread band, arranged to define a desired tread design. Between the tread band and the belt layer(s), a so-called "underlayer" made of elastomeric material can be interposed with properties suitable for obtaining a stable joining of the belt layer(s) with the tread band itself.

Respective sidewalls made of elastomeric material are also applied in axially outer position on the lateral surfaces of the carcass structure, each extended from one of the lateral edges of the tread band up to the respective anchoring annular structure at the beads.

In a process of building the green tyre, it can be provided to separately make a so-called "carcass sleeve" and a so-called "outer sleeve".

In order to make the carcass sleeve, at least one or more carcass plies are applied on a building drum. The annular anchoring structures are fit or formed on the opposite end flaps of the carcass ply or plies, which are subsequently turned up around the annular structures themselves, so as to enclosed them in a kind of loop. Before terminating the building of the carcass sleeve, at least one portion of the sidewalls can be applied on the carcass ply/plies.

In order to make the outer sleeve, at least one or more belt layers are applied on a second drum or auxiliary drum in mutual radial superimposition. The tread band and possibly at least one portion of the sidewalls is applied in radially outer position with respect to the belt layer(s).

The outer sleeve is then picked up from the auxiliary drum in order to be coupled to the carcass sleeve.

The outer sleeve is for such purpose arranged coaxially around the carcass sleeve. Subsequently the carcass ply or plies are shaped according to a toroidal configuration by means of mutual axial approach of the beads and simultaneous introduction of pressurized fluid within the carcass sleeve, so as to determine a radial dilation of the carcass plies up to making them adhere against the inner surface of the outer sleeve.

The assembly of the carcass sleeve with the outer sleeve can be actuated on the same drum used for making the carcass sleeve, in which case this is termed "single-stage building process" or "single-stage process".

Also known are building processes of so-called "two-stage" type, in which a so-called building drum is employed for making the carcass sleeve, while the assembly between carcass sleeve and outer sleeve is actuated on a so-called "shaping drum" on which the carcass sleeve picked up from the building drum and, subsequently, the outer sleeve picked up from the auxiliary drum are transferred.

Following the building of the green tyre, a moulding and vulcanisation treatment is executed that is aimed to determine the structural stabilization of the tyre by means of cross-linking of the elastomeric compositions, as well as to impart on the same, if required, a desired tread design and possible distinctive graphic marks at the sidewalls of the tyre.

With the term "carcass sleeve", it is intended a set of components comprising one or more carcass plies whose opposite end flaps are turned up around respective annular anchoring structures to form the so-called "beads". Possibly the carcass sleeve can comprise at least one portion of the sidewalls applied on the carcass ply/plies. Possibly the carcass sleeve can comprise one or more from among: liner, under-liner, complexes, metallic and/or textile reinforcements, under-belt inserts (if not provided for in the outer sleeve), anti-abrasive inserts, sidewall inserts, self-sealing layer.

With the term "carcass sleeve being processed", it is intended the carcass sleeve in the course of the building thereof and of the movement thereof, up to the completion and subsequent reaching of a shaping station. In other words, a carcass sleeve being processed is a set comprising an increasing number of components of the carcass sleeve, starting from the built first component, moving along the building plant.

With the term "outer sleeve", it is intended a set of components comprising one or more belt layers, possibly a reinforcement layer (belt layer at 0 degrees), a tread band and possibly at least one portion of the sidewalls applied in radially outer position with respect to the belt layer(s). Possibly the outer sleeve can comprise one or more from between under-belt inserts (if not provided for in the carcass sleeve) and underlayer.

With the term "outer sleeve being processed", it is intended the outer sleeve in the course of the building thereof and of the movement thereof, up to the completion and subsequent reaching of the shaping station. In other words, an outer sleeve being processed is a set comprising an increasing number of components of the outer sleeve, starting from the built first component, moving along the building plant.

With the term "green tyre being processed", it is intended a tyre obtained starting from the shaping of the carcass sleeve and from its coupling with the outer sleeve, in order to be subsequently moulded and vulcanised.

With the term "building drum", it is intended a drum used for building and moving a carcass sleeve being processed. In the case of the so-called "two-stage" processes, a carcass sleeve being processed is transferred from the building drum to a different shaping drum in order to shape the carcass sleeve being processed. In the case of the so-called "single-stage" processes, a drum termed "single-stage" substantially comprises the operating mechanisms of the building drum and of the shaping drum.

With the term "auxiliary drum", it is intended a drum used for building and moving an outer sleeve.

With "first stage", it is intended in general terms the step of building the carcass sleeve.

With "second stage", it is intended in general terms the step of building the outer sleeve.

With the term "closed path" of the first stage or of the second stage, it is intended a loop path in which an initial position of the path coincides with a final position of the path.

With the term "open path" of the first stage or of the second stage, it is intended a path having an initial position and a final position that are different from each other.

With the term first-stage or second-stage "operating section", it is intended a section along which the carcass sleeve being processed is associated with the respective building drum or the outer sleeve being processed is associated with the respective auxiliary drum during the building and the movement.

With the term "arranged in a fixed reference position" referred to a gripping ring, it is intended the fact that the gripping ring is stably positioned in a point of the building plant and does not undergo any spatial movement during all the steps of building the green tyre, in particular when it receives a carcass sleeve being processed and an outer sleeve being processed and during the subsequent shaping of the carcass sleeve being processed.

With the term "tyre", when not otherwise specified, it is intended a tyre moulded and vulcanised, a green tyre or any one part thereof.

The term "radial" and the expression "radially inner/outer" are used with reference to the radial direction of the devices used (e.g. drums, gripping ring) and/or of the tyre, i.e. to a direction perpendicular to the rotation or central axis of the devices used/tyre.

The term "axial" and the expression "axially inner/outer" are used with reference to the axial direction of the devices used (e.g. drums, gripping ring) and/or of the tyre, e.g. to a direction parallel to the rotation or central axis of the devices used/tyre. The terms "circumferential" and "circumferentially" are used with reference to the annular extension of the devices used or of the tyre.

With the term "elastomeric material", it is intended to indicate composition comprising at least one elastomeric polymer and at least one reinforcement filler. Preferably, such composition also comprises additives such as, for example, a cross-linking and/or a plasticizing agent. Due to the presence of the cross-linking agent, by means of heating such material can be cross-linked, so as to form the final manufactured item.

By "component" of a tyre it is intended any one portion thereof capable of carrying out a function thereof, or a part thereof. Components of the tyre therefore include: liner, under-liner, anti-abrasive inserts, bead core, fillers in the zone of the bead, carcass ply/plies, belt layer(s), belt underlayer, underlayer of the tread band, sidewalls, sidewall inserts, tread band, textile or metallic reinforcements, reinforcement elements made of elastomeric material, etc. or a part thereof.

By "semi-finished product" it is intended a prefabricated manufactured item (i.e. fabricated before the production of the tyre and generally outside the building plant) in order to form a component of a tyre. The manufactured item is prefabricated throughout its width. In other words, the semi-finished products have a pre-sized width thereof so as be equal to the width (measured in an axial direction of the tyre) of the component of the tyre that the semi-finished product is adapted to form. The manufactured item can also be prefabricated throughout its length. In other words, the semi-finished products can have a pre-sized length thereof so as to be equal to the length (measured in a direction circumferential of the tyre) of the component of the tyre that the semi-finished product is adapted to form. The formation of the component of the tyre is generally carried out by means of circumferential winding of the semifinished product on a substantially cylindrical deposition surface, transverse cut-to-size of the semi-finished product and headhead joint of the ends of the cut semi-finished product. The prefabricated semi-finished product is adapted to be stored (e.g. on suitable storage reels) in order to then be used in a tyre production plant. The semi-finished product can be made only of elastomeric material or it can be reinforced with at least one cord made of textile and/or metallic and/or hybrid material.

With the expression "continuous elongated element", it is intended a semi-finished elementary product having the shape of an elongated manufactured item only made of elastomeric material or comprising at least one cord (of textile and/or metallic material) which is extended parallel to the longitudinal extension of the continuous elongated element itself and is incorporated or at least partially covered by at least one layer made of elastomeric material.

Preferably, the continuous elongated element is adapted to be spiralled on a building drum / auxiliary drum in order to form components of a carcass sleeve / outer sleeve, respectively.

Preferably the transverse size of the continuous elongated element is comprised between about 1 mm and about 30 mm.

WO2010/064077 in the name of the same Applicant illustrates an assembly station in which a carcass sleeve and an outer sleeve, made in respective building lines, are mutually coupled. The assembly station integrates engagement devices that can be alternatively coupled to an auxiliary drum carrying an outer sleeve, and to a building drum carrying a carcass sleeve. A gripping unit picks up the outer sleeve from the auxiliary drum coupled to the engagement devices, in order to position it in radially outer position with respect to the carcass sleeve carried by the building drum, coupled to the engagement devices in substitution of the auxiliary drum. Shaping devices that can be operatively coupled with the building drum cause a radial expansion for the carcass sleeve so as to couple it to the outer sleeve held by the gripping unit.

WO2012/146988 in the name of the same Applicant describes a process and a plant for producing tyres comprising: building a carcass structure on a first stage drum, building a crown structure, coupling the crown structure to the carcass structure on the first stage drum or on a shaping drum.

The plant comprises a second transfer station which comprises at least one second transfer member that can be alternatively positioned around an operating drum and around a primary drum operating in the carcass structure building line.

US5861079 describes a transfer ring for a tyre assembly machine. According to such document it is current practice, in the tyre field, to separately build a carcass and a tread band. The tread band forms a belt which must then be precisely positioned on the carcass by means of a transfer ring which can also be used for moving the green tyre.

The Applicant observes that the current market needs in the field of tyres require a finished product that is increasingly highperforming and with more limited costs, so that it is requested to improve the quality levels without negatively affecting the cycle time and consequently the final costs of production.

The Applicant has perceived the importance of the step of shaping the carcass sleeve and of coupling between the outer sleeve and the same carcass sleeve to obtain an optimal balancing of the aforesaid requirements.

In particular, the Applicant has investigated the possibility to balance such opposite aspects by means of a suitable management of the flows of the drums and of the sleeves within the plant towards the shaping station.

The Applicant has observed that in the plants of the type of those described in the abovementioned documents, the management of the flows provides for a sequence of movements which substantially involves all the provided devices, in particular the device for transferring the outer sleeve. Such movements require a precise control for managing the coaxiality between the outer sleeve and the carcass sleeve and such control negatively affects the cycle time.

The Applicant has therefore perceived that by requiring the passage of the aforesaid flows towards a spatially fixed station coinciding with the aforesaid device for transferring the outer sleeve, it was possible to positively comply with the abovementioned requirements.

The Applicant has finally found that the management of the flows of the drums and of the sleeves towards a fixed shaping station that coincides with the gripping ring of the outer sleeve allows obtaining high and repeatable quality levels, in particular with reference to the coaxiality between the outer sleeve and the carcass sleeve, without negatively affecting the cycle time and the costs of production.

In accordance with a first aspect, the present invention relates to a method for building tyres for vehicle wheels.

Preferably provision is made for moving a plurality of building drums along a closed first-stage path.

Preferably provision is made for moving a plurality of carcass sleeves being processed along an open first-stage path.

Preferably, along a first stage operating section in common between said closed first-stage path and said open first-stage path, each carcass sleeve being processed of said plurality of carcass sleeves being processed is built on a respective building drum of said plurality of building drums.

Preferably said open first-stage path terminates at a gripping ring arranged in a fixed reference position.

Preferably provision is made for moving a plurality of auxiliary drums along a closed second-stage path.

Preferably provision is made for moving a plurality of outer sleeves being processed along an open second-stage path.

Preferably, along a second stage operating section in common between said closed second-stage path and said open second-stage path, each outer sleeve being processed of said plurality of outer sleeves being processed is built and moved on a respective auxiliary drum of said plurality of auxiliary drums.

Preferably said open second-stage path terminates at said gripping ring.

Preferably, at the end of the second stage operating section, provision is made for separating, from the respective auxiliary drum, a first outer sleeve being processed of said plurality of outer sleeves being processed.

Preferably, at the end of the second stage operating section, provision is made for holding said first outer sleeve being processed by means of said gripping ring.

Preferably, at the end of the open first-stage path, provision is made for arranging a first carcass sleeve being processed of said plurality of carcass sleeves being processed in a coaxial and radially inner position with respect to the first outer sleeve being processed held by said gripping ring.

Preferably provision is made for shaping, within the gripping ring, said first carcass sleeve being processed, assembling it with said first outer sleeve being processed to obtain a first green tyre being processed.

In accordance with a second aspect, the present invention relates to a plant for building tyres for vehicle wheels. Preferably, a first stage building line is provided.

Preferably the first stage building line defines a closed first-stage path for moving a plurality of building drums
Preferably the first stage building line defines an open first-stage path for building and moving carcass sleeves being processed.

Preferably said closed first-stage path and said open first-stage path have a first stage operating section in common for building and moving each carcass sleeve being processed of said plurality of carcass sleeves being processed associated with a respective building drum of said plurality of building drums.

Preferably said first stage building line comprises a plurality of first stage work stations arranged along a portion of the first stage operating section.

Preferably a second stage building line is provided.

Preferably the second stage building line defines a closed second-stage path for moving a plurality of auxiliary drums.

Preferably the second stage building line defines an open second-stage path for building and moving a plurality of outer sleeves being processed.

Preferably said closed second-stage path and said open second-stage path have a second stage operating section in common for building and moving each outer sleeve being processed of said plurality of outer sleeves being processed associated with a respective auxiliary drum of said plurality of auxiliary drums.

Preferably said second stage building line comprises a plurality of second stage work stations arranged along a portion of the second stage operating section.

Preferably a gripping ring is provided, arranged in a fixed reference position.

Preferably said open second-stage path and said open first-stage path terminate at said gripping ring
Preferably said gripping ring is configured for the assembly of said first carcass sleeve being processed with a first outer sleeve being processed.

The Applicant deems that by managing the flows of the drums and of the sleeves towards a fixed shaping station that coincides with the gripping ring of the outer sleeve, it is possible to obtain high quality levels, in particular with reference to the coaxiality between the outer sleeve and the carcass sleeve, without negatively affecting the cycle time.

In one or more of the above-indicated aspects, the present invention can comprise one or more of the following characteristics.

Preferably, along said first stage operating section in common between said closed first-stage path and said open first-stage path, each carcass sleeve being processed of said plurality of carcass sleeves being processed is moved on a respective building drum of said plurality of building drums.

Preferably the gripping ring performs radially outer contrast function during the shaping of the first carcass sleeve being processed.

Preferably said gripping ring is configured for carrying out radially outer contrast function during the shaping of a first carcass sleeve being processed.

The Applicant deems that such aspect optimises the work flows and improves the coaxiality between the outer sleeve and the carcass sleeve.

Preferably provision is made for monitoring the force exerted on the gripping ring by the first carcass sleeve being processed and by the first outer sleeve being processed during the shaping of the first carcass sleeve being processed.

The Applicant deems that such aspect improves the quality of the tyre and allows feedbacking the results of the monitoring and hence limiting the discards without affecting the cycle time.

Preferably said open first-stage path comprises a final section arranged within a shaping machine and ending at said gripping ring.

Preferably said first carcass sleeve being processed is moved axially along said final section associated with a shaping drum until it is arranged in a coaxial and radially inner position with respect to the first outer sleeve being processed held by said gripping ring.

Preferably, the shaping drum is stably associated with the shaping machine and is structurally separated from the building drum.

Preferably provision is made for separating the first carcass sleeve being processed by the respective building drum and fitting it on the shaping drum.

Preferably, said action of separating the first carcass sleeve being processed by the respective building drum occurs outside the shaping machine.

Preferably the first stage operating section terminates outside the shaping machine.

Preferably the building drum is a "single-stage" drum adapted to operate as a shaping drum in the shaping machine. Preferably the first stage operating section terminates at the gripping ring.

Preferably provision is made for removing said shaping drum carrying said first green tyre being processed by said gripping ring by moving it along a finishing path.

Preferably provision is made for performing a rolling action of said first green tyre being processed associated with said shaping drum in a rolling station arranged along said finishing path.

Preferably provision is made for again arranging said first green tyre being processed at said gripping ring, after said rolling action.

Preferably said finishing path is a closed path that starts and ends at said gripping ring.

The Applicant deems that such aspect improves the management of the tyre within the plant.

Preferably provision is made for separating said first green tyre being processed by the shaping drum at the end of the finishing path.

Preferably provision is made for holding said first green tyre being processed by means of said gripping ring.

The Applicant deems that such aspect allows centralizing the plant on the gripping ring which, being in fixed position, allows greater precision in the movements and couplings.

Preferably provision is made for performing a quality check of said first green tyre being processed by means of said gripping ring.

The Applicant deems that such aspect improves the quality of the tyre and allows feedbacking the results of the monitoring and hence limiting the discards without affecting the cycle time. Preferably said finishing path is arranged inside said shaping machine.

Preferably provision is made for removing said first green tyre being processed by said shaping machine at the end of the finishing path.

Preferably provision is made for removing said first green tyre being processed by said gripping ring at the end of the finishing path.

Preferably the action of separating said first outer sleeve being processed by the respective auxiliary drum is performed by means of said gripping ring.

Preferably said second stage operating section terminates at said gripping ring.

Preferably separating said first outer sleeve being processed by the respective auxiliary drum comprises axially moving the auxiliary drum carrying the first outer sleeve being processed and inserting it in the gripping ring at a first access of the gripping ring itself until reaching a radially inner position with respect to the gripping ring.

Preferably separating said first outer sleeve being processed by the respective auxiliary drum comprises holding said first outer sleeve being processed by means of said gripping ring while the auxiliary drum is axially withdrawn from the first outer sleeve being processed.

Preferably during the withdrawal, the auxiliary drum free of the first outer sleeve being processed is moved axially according to an opposite sense with respect to that with which it was inserted.

Preferably arranging said first carcass sleeve being processed in a coaxial and radially inner position with respect to the first outer sleeve being processed comprises axially moving said first carcass sleeve being processed and inserting it in the gripping ring at a second access of the gripping ring itself axially opposite said first access.

The Applicant deems that such aspect improves the management of the flows and the layout of the plant.

Preferably the first carcass sleeve is moved, axially associated with a shaping drum, up to being inserted in the gripping ring at said second access.

Preferably provision is made for building, by depositing semifinished products, a first part of components of a carcass sleeve being processed along a first portion of said first stage operating section.

Preferably said first part of components comprises at least one carcass ply.

Preferably provision is made for building, by spiralling a continuous elongated element, a second part of components of a carcass sleeve being processed along a second portion of said first stage operating section

Preferably said second part of components comprises at least one between anti-abrasive inserts and at least one portion of sidewalls.

The Applicant deems that such division allows optimising the layout of the plant, improving the quality of the tyre and the flexibility of the plant.

Preferably at least one first stage work station comprising a semi-finished product dispensing device is arranged along a first portion of said first stage operating section for building a first part of components of a carcass sleeve being processed. Preferably, said first part of components comprises at least one carcass ply.

Preferably at least one first stage work station comprising a device for dispensing a continuous elongated element is arranged along a second portion of said first stage operating section for building a second part of components of a carcass sleeve being processed.

Preferably, said second part of components comprises at least one between an anti-abrasive insert and at least one portion of sidewalls.

The Applicant deems that such division allows optimising the layout of the plant, improving the quality of the tyre and the flexibility of the plant.

Preferably provision is made for performing a bead building action in a position arranged between said first portion and said second portion of the first stage operating section. Preferably said bead building action comprises engaging axially opposite ends of a carcass sleeve being processed a respective annular anchoring structures.

Preferably said first stage building line comprises a work station configured for building the beads arranged between said first portion and said second portion of said first stage operating section.

Preferably provision is made for building, by depositing semifinished products, a first part of components of an outer sleeve being processed along a first portion of the second stage operating section.

Preferably, said first part of components comprises at least one belt layer.

Preferably provision is made for building, by spiralling a continuous elongated element, a second part of components of an outer sleeve being processed along a second portion of the second stage operating section.

Preferably said second part of components comprises at least one tread band.

The Applicant deems that such division allows optimising the layout of the plant, improving the quality of the tyre and the flexibility of the plant.

Preferably at least one second stage work station comprising a semi-finished product dispensing device is arranged along a first portion of said second stage operating section for building a first part of components of the outer sleeve being processed. Preferably, said first part of components comprises at least one belt layer.

Preferably at least one second stage work station comprising a device for dispensing a continuous elongated element is arranged along a second portion of said second stage operating section for building a second part of components of the outer sleeve being processed.

Preferably, said second part of components comprises at least one tread band.

The Applicant deems that such division allows optimising the layout of the plant, improving the quality of the tyre and the flexibility of the plant.

Further characteristics and advantages will be clearer from the following detailed description of a preferred non-limiting embodiment.

Such description will be set forth hereinbelow with reference to the enclosed drawings, provided only as a non-limiting example, in which:
- figure 1 and figure 2 schematically illustrate a top view of a plant for producing tyres;
- figures 3-9 illustrate a side view of a portion of the plant of figure 1 or 2 in different configurations corresponding to several actions of a method for building tyres;

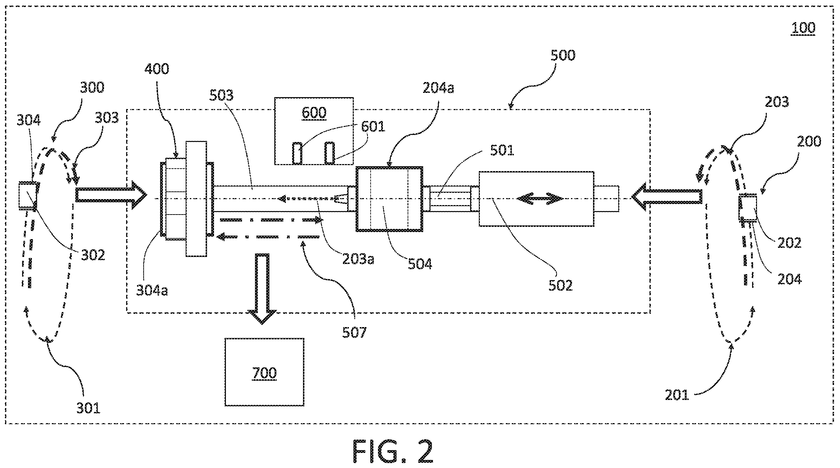

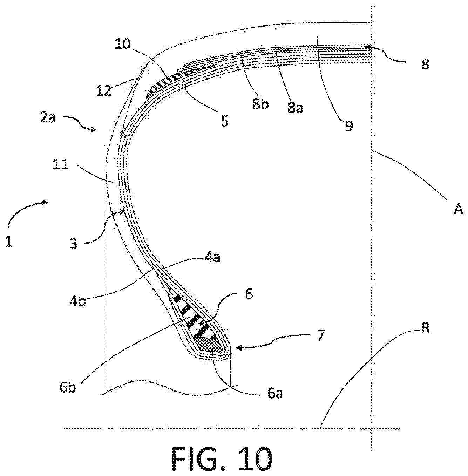

- figure 10 illustrates a radial half-section of a tyre that can be attained by the method and the plant according to the invention. With reference to figure 10, a tyre 1 has a middle line plane A perpendicular to the rotation axis R of the same (it is specified that in figure 2 the position of the rotation axis R with respect to the section of the tyre 1 is shown only as a schematic example). The middle line plane A divides the tyre 1 into a first axial half 2a and a second axial half. For illustration simplicity, figure 10 shows only the first axial half 2a of the tyre 1, the other half being substantially mirrored (except for the tread design which might not be symmetric with respect to the aforesaid middle line plane A).

The tyre 1 essentially comprises a carcass structure 3 having one or two carcass plies 4a, 4b. An airtight elastomeric material layer or so-called liner 5 is applied inside the carcass ply/plies 4a, 4b. Two annular anchoring structures 6 (of which only that of the axial half 2a is shown in figure 10) are engaged, in axially opposite positions (with respect to the middle line plane A), with respective axial ends of the carcass ply/plies 4a, 4b. The two annular anchoring structures 6 each comprise a so-called bead core 6a carrying an elastomeric filler 6b in radially outer position. The two annular anchoring structures 6 are integrated in proximity to zones normally identified with the name "beads" 7 (of which only that of the axial half 2a is shown in figure 10), at which the engagement between the tyre 1 and a respective mounting rim usually occurs. A belt structure 8 comprising belt layers 8a, 8b is circumferentially applied around the carcass ply/plies 4a, 4b, and a tread band 9 is circumferentially superimposed on the belt structure 8. The belt structure 8 can comprise a further layer (not illustrated) so-called at zero degrees in radially outer position with respect to the aforesaid layers 8a, 8b. The belt structure 8 can also be associated with so-called "under-belt inserts" 10, each situated between the carcass ply/plies 4a, 4b and one of the axially opposite terminal edges of the belt structure 8. Two sidewalls 11, each extended from the corresponding bead 7 to a corresponding lateral edge of the tread band 9, are applied in axially opposite positions (with respect to the middle line plane A) on the carcass ply/plies 4a, 4b. The set of the portion of each sidewall 11 close to the respective lateral edge of the tread band 9 and of each portion of the tread band 9 close to the respective sidewall 11 is known as shoulder 12 of the tyre.

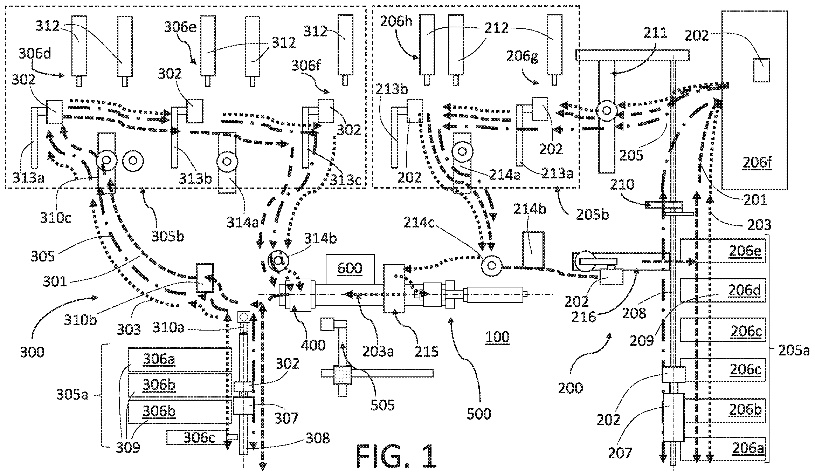

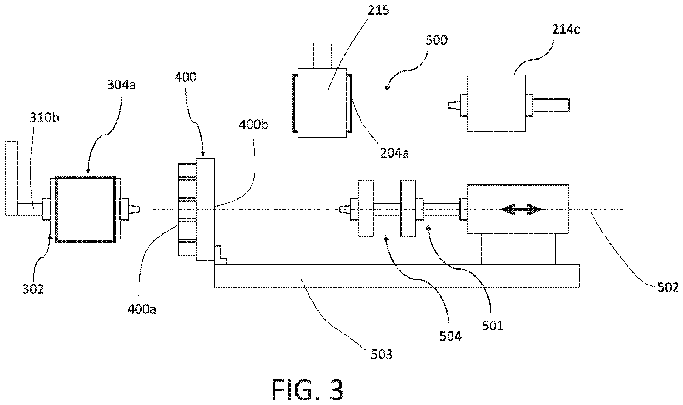

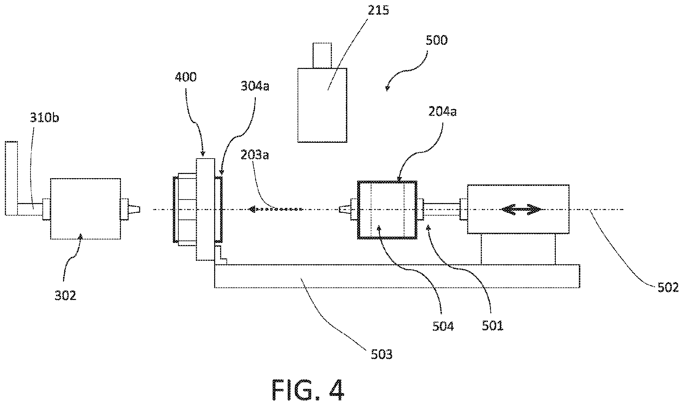

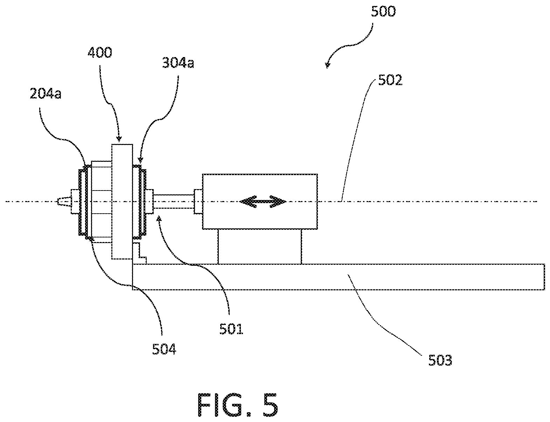

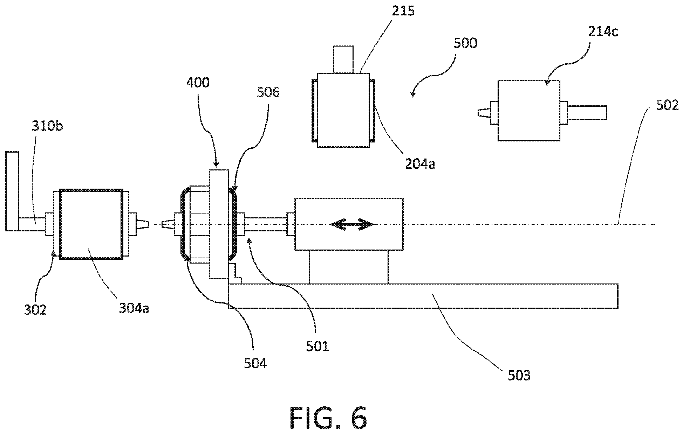

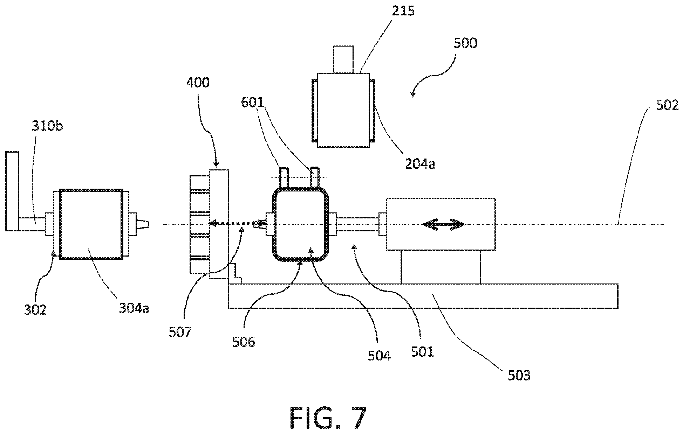

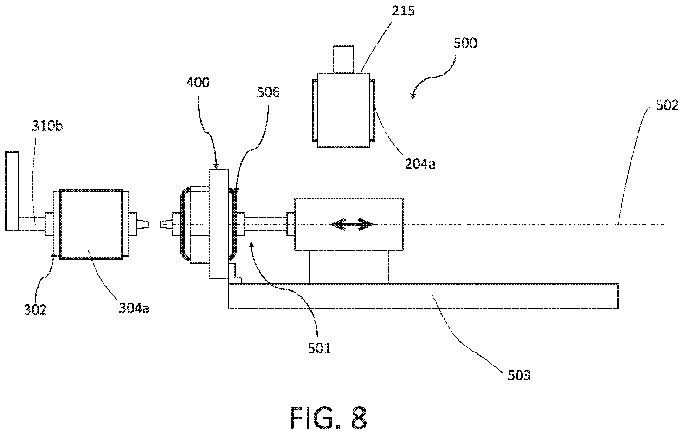

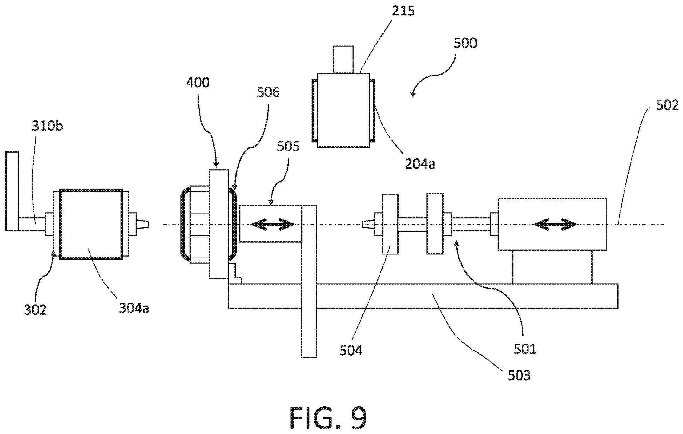

With reference to figures 1-9, reference number 100 indicates a plant for building tyres, hereinbelow more simply indicated as plant 100.

The plant 100 comprises a first stage building line 200 for building carcass sleeves, a second stage building line 300 for building outer sleeves and a gripping ring 400 arranged in a fixed reference position within the plant 100.

Preferably the plant 100 comprises a shaping machine 500 which, in turn, preferably comprises the gripping ring 400 arranged in fixed position within the shaping machine 500.

Preferably the plant 100 comprises a rolling station 600. Still more preferably the shaping machine 500 comprises the rolling station 600.

In addition, the plant 100 comprises a vulcanisation line 700 arranged in a proximal or remote position with respect to the first stage building line 200 and to the second stage building line 300.

The first stage building line 200 defines a closed first-stage path 201 for moving a plurality of building drums 202 and an open first-stage path 203 for building and moving carcass sleeves being processed 204. Except for possible size changes, the building drums 202 are continuously moved along the closed first-stage path 201, providing support to respective carcass sleeves being processed 204.

The closed first-stage path 201 starts and finishes at a same position.

The open first-stage path 203 starts in the position in which, on a respective building drum 202, a first component of a carcass sleeve being processed 204 is built, or a first part thereof is built, and terminates at the gripping ring 400.

In a normal operating condition of the plant, N building drums 202 (simultaneously for N>1) are moved along the closed first-stage path 201 and N carcass sleeves being processed 204 (simultaneously for N>1) are moved along the open first-stage path 203. N is an integer greater than or equal to 1, preferably greater than or equal to 5 and still more preferably equal to 6. Preferably, the building drums 202 are substantially cylindrical. The closed first-stage path 201 and the open first-stage path 203 have a first stage operating section 205 in common. Along the first stage operating section 205, each carcass sleeve being processed 204 is built and more preferably moved, associated with a respective building drum 202. In other words, the first stage operating section 205 starts in the position in which, on a respective building drum 202, a first component of a carcass sleeve being processed 204 is built, or a first part thereof is built, and terminates in the position in which the carcass sleeve being processed 204 is separated from the respective building drum 202 or at the gripping ring 400 where the carcass sleeve being processed is shaped and assembled to a respective outer sleeve being processed.

The first stage building line 200 comprises one or more transfer devices for moving the building drums 202 along the closed first-stage path 201 and/or the carcass sleeves being processed 204 along the open first-stage path 203.

A transfer device can for example comprise one or more from among:
- a non-anthropomorphic Cartesian handling device, preferably with at least four, more preferably five degrees of freedom, configured for gripping one building drum 202 at a time and/or one carcass sleeve being processed 204 at a time and moving it preferably along three Cartesian axes and in rotation around at least one, preferably two, of said Cartesian axes,
- an anthropomorphic robot preferably with a robotic arm with at least 6 movement axes, configured for gripping and moving one building drum 202 at a time and/or one carcass sleeve being processed 204 at a time,
- a shuttle that is movable for example on guides, preferably rectilinear, configured for gripping one building drum 202 at a time and/or one carcass sleeve being processed 204 at a time and moving it preferably along a single axis,
- at least one support, possibly translating and/or rotating, configured for receiving and possibly moving one building drum 202 at a time, preferably with rotation axis vertically oriented, and/or one carcass sleeve being processed 204 at a time.

One or more transfer devices, preferably one or more anthropomorphic robots and/or one or more shuttles, can be configured for imparting a building motion to the building drum 202. The building motion is for example a rotary motion of the building drum 202 around the axis thereof and/or an axial translation motion.

For building the carcass sleeve being processed 204, the first stage building line 200 comprises a plurality of first stage work stations arranged along the first stage operating section 205. The first stage work stations are operatively connected to each other by means of at least one part of the transfer devices.

Each first stage work station is configured for building a component of a carcass sleeve, or at least one part thereof, on a respective building drum 202.

The first stage building line 200 can for example comprise the following first stage work stations, listed according to an operating sequence with which the carcass sleeve being processed 204 can be built:
- a work station 206a configured for the application of the liner (optional);
- a work station 206b configured for the application of the under-liner (optional);
- a work station 206c configured for the application of a carcass ply, said carcass ply able to comprise under-belt inserts associated therewith;
- a work station 206d configured for the application of metallic and/or textile reinforcements (optional);
- a work station 206e configured for the application of sidewall inserts;
- a work station 206f configured for building the beads;
- a work station 206g configured for the application of anti-abrasive inserts (optional);
- a work station 206h configured for the application of at least one portion of the sidewalls, corresponding to at least the radially inner portion of the sidewalls of the tyre.

Other different stations can be provided in addition or in substitution, for example a work station can be present that is configured for building a self-sealing layer, or the work stations configured for the application of the liner and of the under-liner can be substituted by a work station configured for the application of the so-called complex or liner-complex, comprising liner, under-liner and anti-abrasive insert.

In addition to the work station 206c configured for the application of a carcass ply and to the work station 206f configured for building the beads, at least one of the first stage work stations listed above as optional may possibly be provided. Each first stage work station can be repeated one or more times. For example, two work stations 206c can be provided, as illustrated in figure 1, each configured for the application of a carcass ply.

The first stage work stations can be arranged according to a spatial sequence equal to or different from the operating sequence with which the carcass sleeve being processed 204 is built.

A first part of components of the carcass sleeve being processed 204 comprises at least one carcass ply and preferably also one or more from among liner, under-liner, metallic and/or textile reinforcements, under-belt inserts, sidewall inserts, self-sealing layer, anti-abrasive insert.

Preferably the first part of components of the carcass sleeve being processed 204 comprises the so-called "braced" components, i.e. made of elastomeric material reinforced with cords made of textile and/or metallic and/or hybrid material.

The first part of components is built along a first portion 205a of the first stage operating section 205. In other words, at least work station/stations 206c configured for the application of a carcass ply is/are arranged along the first portion 205a of the first stage operating section 205. Preferably all the first stage work stations - provided that, according to the operating sequence with which the carcass sleeve being processed 204 is built, they precede work station 206f configured for building the beads - are arranged along the first portion 205a of the first stage operating section 205.

Such work stations 206a, 206b, 206c, 206d and 206e are preferably sequentially arranged between two ends of the first portion 205a of the first stage operating section 205.

Preferably, the first portion 205a of the first stage operating section 205 is substantially rectilinear.

Each building drum 202 can be moved between the work stations of the first portion 205a of the first stage operating section 205 in a sequence equal to or different from the spatial sequence of such work stations.

Along the first portion 205a of the first stage operating section 205, the building of the first part of components of the carcass sleeve being processed 204 is preferably carried out with the building drum 202 associated with a pair of axially opposite support rings (not shown).

The first stage work stations arranged along the first portion 205a of the first stage operating section 205 are arranged to form, on each building drum 202, the first part of components of the carcass sleeve being processed 204, according to predefined manufacturing instructions. In particular each building drum 202 is preferably moved between the first stage work stations arranged along the first portion 205a of the first stage operating section 205 according to a sequence defined by the reference specifications that can be programmed/configured for each carcass sleeve being processed.

The first stage building line 200 comprises at least one transfer device 207, e.g. a shuttle, dedicated to the first portion 205a of the first stage operating section 205 in order to move each building drum 202, preferably associated with the pair of support rings, between one or more of the work stations of the first portion 205a. Preferably the transfer device 207 is configured for supporting each building drum 202 and for imparting a building motion (rotary motion and/or axial translation motion) thereto.

Preferably the transfer device 207 is configured for moving one of the N building drums 202 at a time along the first portion 205a of the first stage operating section 205.

The transfer device 207 is for example attained by means of a shuttle capable of being moved - moved by a suitable motor - preferably along guides 208 (preferably rectilinear) in two opposite travel directions, and of imparting a building motion (rotary motion and/or axial translation motion) to the building drum 202.

Preferably first stage work station/stations arranged along the first portion 205a of the first stage operating section 205 comprises/comprise a semi-finished product dispensing device 209. First stage work station/stations arranged along the first portion 205a of the first stage operating section 205 is/are arranged to form the first part of components of the carcass sleeve being processed 204 by depositing semi-finished products.

Such semi-finished products are preferably made of elastomeric material reinforced with cords made of textile and/or metallic and/or hybrid material. Such cords are preferably arranged parallel to each other and oriented with a certain angle with respect to the longitudinal extension of the semi-finished product.

Preferably the first stage building line 200 comprises a transfer device 210 operatively interposed between the first portion 205a of the first stage operating section 205 and the work station 206f configured for building the beads. The work station 206f configured for building the beads is arranged between the first portion 205a and a second portion 205b of the first stage operating section 205.

Preferably the transfer device 210 is configured for transferring sequentially, one at a time, the N building drums 202 exiting from the first portion 205a of the first stage operating section 205 to the work station 206f. In addition, such transfer device is preferably configured for separating each building drum 202 from the pair of support rings.

The transfer device 210 can comprise a rotating support configured for cooperating with the transfer device 207 in order to separate each building drum 202 from the pair of support rings. In addition the transfer device 210 can comprise a translating support and/or an anthropomorphic robot for transferring each building drum 202 from the rotating support to the work station 206f.

In the work station 206f and along the second portion 205b of the first stage operating section 205, the building drum 202 is separated from the pair of support rings.

The work station 206f configured for building the beads is adapted to sequentially carry out, on one of the N building drums at a time, the engagement of axially opposite ends of the carcass structure being processed with respective annular anchoring structures.

Preferably the first stage building line 200 comprises a transfer device 211 operatively interposed between the work station 206f configured for building the beads and the second portion 205b of the first stage operating section 205. The transfer device 211 is configured for transferring sequentially, one at a time, the N building drums 202 exiting from the work station 206f to the second portion 205b of the first stage operating section 205. The transfer device 211 can comprise an anthropomorphic robot or a Cartesian handling device and/or a possibly translating support.

A second part of components of the carcass sleeve being processed 204 comprises at least one from between anti-abrasive inserts and at least one portion of sidewalls, in such case at least the radially inner portion of sidewalls of the tyre. Preferably the second part of components of the carcass sleeve being processed 204 comprises the non-"braced" components, i.e. only made of elastomeric material.

The second part of components is built along the second portion 205b of the first stage operating section 205. In other words, at least one between the work station 206g configured for the application of anti-abrasive inserts and the work station 206h configured for the application of at least one portion of the sidewalls is arranged along the second portion 205b of the first stage operating section 205. Preferably all the work stations 206g-206h - which according to the operating sequence with which the carcass sleeve being processed 204 is built, follow the work station 206f configured for building the beads - are arranged along the second portion 205b of the first stage operating section 205.

The N building drums which progressively exit from the work station 206f are moved along the second portion 205b of the first stage operating section 205.

Each building drum 202 can be moved between the work stations of the second portion 205b of the first stage operating section 205 in a sequence equal to or different from the spatial sequence of such work stations.

The first stage work stations arranged along the second portion 205b of the first stage operating section 205 are arranged to form, on each building drum 202, the second part of components of the carcass sleeve being processed 204, according to predefined manufacturing instructions. In particular each building drum 202 is preferably moved between the first stage work stations arranged along the second portion 205b of the first stage operating section 205 according to a sequence defined by the reference specifications that can be programmed/configured for each carcass sleeve being processed.

Preferably first stage work station/stations arranged along the second portion 205b of the first stage operating section 205 comprises/comprise a device for dispensing a continuous elongated element 212, preferably an extruder. First stage work station/stations arranged along the second portion 205b of the first stage operating section 205 is/are arranged to form the second part of components of the carcass sleeve being processed 204 by spiralling. Preferably, at least one first stage work station arranged along the second portion 205b of the first stage operating section 205 is provided with two or more devices for dispensing a continuous elongated element 212 so as to allow selecting the type of continuous elongated element to be dispensed, depending on the predefined manufacturing instructions for the carcass sleeve being processed.

The continuous elongated element 212, in the example illustrated in figure 1, is only made of elastomeric material.

Preferably the first stage building line 200 comprises a plurality of transfer devices 213a, 213b and 213c for moving the N building drums 202 between the work stations of the second portion 205b of the first stage operating section 205 and 214a, 214b and 214c dedicated to the final part of the second portion 205b and of the first stage operating section 205.

One or more transfer devices 213a, 213b are configured both for moving the building drums 202 along the second portion 205b of the first stage operating section 205, and for supporting them during the spiralling of the continuous elongated element thereon and for imparting a building motion (rotary motion and axial translation motion) to the building drums 202. In particular two transfer devices 213a, 213b are provided for, respectively associated with the work station 206g configured for the application of anti-abrasive inserts and with the work station 206h configured for the application of at least one portion of the sidewalls.

For example, each transfer device 213a, 213b, is made by means of an anthropomorphic robot, preferably with a robotic arm with at least 6 movement axes.

One or more transfer devices 214a, 214b and 214c are used only in the movement of the building drums 202 along the final part of the second portion 205b of the first stage operating section 205. Preferably, such transfer devices comprise a translating support 214a and/or a Cartesian handling device 214b and/or a fixed or rotating support 214c.

According to one possible embodiment, illustrated in the figures, the first stage operating section 205 terminates outside the shaping machine 500, for example at the transfer device 214c made by means of a rotating support which supports the building drum 202 while the carcass sleeve being processed 204 is separated therefrom and moved away along the open first-stage path 203 by means of a transfer device 215, for example a Cartesian handling device.

A transfer device 216, for example a shuttle or a translating support, closes the closed first-stage path 201, bringing back to an initial position the building drum 202, uncoupled from the carcass sleeve being processed. Before again starting a production cycle, the building drum 202 is newly associated with the corresponding support rings.

The open first-stage path 203 comprises a final section 203a arranged within the shaping machine 500 and ending at the gripping ring 400.

The second stage building line 300 defines a closed second-stage path 301 for moving a plurality of auxiliary drums 302 and an open second-stage path 303 for building and moving outer sleeves being processed 304. Except for possible size changes, the auxiliary drums 302 are continuously moved along the closed second-stage path 301, providing support to respective outer sleeves being processed 304.

The closed second-stage path 301 starts and finishes at a same position.

The open second-stage path 303 starts in the position in which, on a respective auxiliary drum 302, a first component of an outer sleeve being processed 304 is built, or a first part thereof is built, and terminates at the gripping ring 400.

In a normal operating condition of the plant, M auxiliary drums 302 (simultaneously for M>1) are moved along the closed second-stage path 301 and M outer sleeves being processed 304 (simultaneously for M>1) are moved along the open second-stage path 303.

M is an integer greater than or equal to 1, preferably greater than or equal to 5 and still more preferably equal to 6. In a preferred embodiment, considered in the following description, N=M>1.

Preferably, the auxiliary drums 302 have a geometry variable from cylindrical to slightly convex.

The closed second-stage path 301 and the open second-stage path 303 have a second stage operating section 305 in common. Along the second stage operating section 305, each outer sleeve being processed 304 is built and moved, associated with a respective auxiliary drum 302. In other words, the second stage operating section 305 starts in the position in which, on a respective auxiliary drum 302, a first component of an outer sleeve being processed 304 is built, or a first part thereof is built, and terminates in the position in which the outer sleeve being processed 304 is separated from the respective auxiliary drum 302 or at the gripping ring 400 where the outer sleeve being processed is assembled with a respective carcass sleeve being processed.

The second stage building line 300 comprises one or more transfer devices for moving the auxiliary drums 302 along the closed second-stage path 301 and/or the outer sleeves being processed 304 along the open second-stage path 303.

A transfer device can for example comprise one or more from among:
- a non-anthropomorphic Cartesian handling device, preferably with at least four, more preferably five degrees of freedom, configured for gripping one auxiliary drum 302 at a time and/or one outer sleeve being processed 304 at a time and moving it preferably along three Cartesian axes and in rotation around at least one, preferably two of said Cartesian axes, or
- an anthropomorphic robot preferably with a robotic arm with at least 6 movement axes, configured for gripping and moving one auxiliary drum 302 at a time and/or one outer sleeve being processed 304 at a time,
- a shuttle that is movable for example on guides, preferably rectilinear, configured for gripping one auxiliary drum 302 at a time and/or one outer sleeve being processed 304 at a time and preferably moving it along a single axis,
- a support, possibly translating and/or rotating, configured for receiving and possibly moving one auxiliary drum 302 at a time, preferably with vertically oriented rotation axis, and/or one outer sleeve being processed 304 at a time.

One or more transfer devices, preferably one or more anthropomorphic robots and/or one or more shuttles, can be configured for imparting a building motion to the auxiliary drum 302. The building motion is for example a rotary motion of the auxiliary drum 302 around the axis thereof and/or an axial translation motion.

For building the outer sleeve being processed 304, the second stage building line 300 comprises a plurality of second stage work stations arranged along the second stage operating section 305. The second stage work stations are operatively connected to each other by means of at least one part of the transfer devices.

Each second stage work station is configured for building a component of an outer sleeve, or at least one part thereof, on a respective auxiliary drum 302.

The second stage building line 300 can for example comprise the following second stage work stations, listed according to an operating sequence with which the outer sleeve being processed 304 can be built:
- a work station 306a configured for the application of under-belt inserts (optional);
- a work station 306b configured for the application of a belt layer;
- a work station 306c configured for the application of a reinforcement layer (belt layer at 0 degrees - optional);
- a work station 306d configured for the application of an underlayer (optional);
- a work station 306e configured for the application of a tread band;
- a work station 306f configured for the application of at least one portion of sidewalls, corresponding to at least the radially outer portion of the sidewalls of the tyre.

In addition to the work station 306b configured for the application of a belt layer and to the work station 306e configured for the application of tread band, at least one of the second stage work stations listed above as optional may possibly be provided. Each second stage work station can be repeated one or more times. For example, two work stations 306b can be provided, as illustrated in figure 1, each configured for the application of a belt layer.

The second stage work stations can be arranged according to a spatial sequence equal to or different from the operating sequence with which the outer sleeve being processed 304 can be built.

A first part of components of the outer sleeve being processed 304 comprises at least one belt layer, preferably two and preferably also a reinforcement layer (belt layer at 0 degrees).

Preferably the first part of components of the outer sleeve being processed 304 comprises the so-called "braced" components, i.e. made of elastomeric material reinforced with cords made of textile and/or metallic and/or hybrid material.

The first part of components is built along a first portion 305a of the second stage operating section 305. In other words, at least work station/stations 6b configured for the application of a belt layer is/are arranged along the first portion 305a of the second stage operating section 305. Preferably all the second stage work stations - provided that, according to the operating sequence with which the outer sleeve being processed 304 can be built, they precede the work station 306d configured for the application of an underlayer or the work station 306e configured for the application of the tread band - are arranged along the first portion 305a of the second stage operating section 305.

Such work stations 306a,306b and 306c are preferably arranged sequentially between two ends of the first portion 305a of the second stage operating section 305.

Preferably, the first portion 305a of the second stage operating section 305 is substantially rectilinear.

Each auxiliary drum 302 can be moved between the work stations of the first portion 305a of the second stage operating section 305 in a sequence equal to or different from the spatial sequence of such work stations.

The second stage work stations arranged along the first portion 305a of the second stage operating section 305 are arranged to form, on each auxiliary drum 302, the first part of components of the outer sleeve being processed 304, according to predefined manufacturing instructions. In particular each auxiliary drum 302 is preferably moved between the second stage work stations arranged along the first portion 305a of the second stage operating section 305 according to a sequence defined by the reference specifications that can be programmed/configured for each outer sleeve being processed.

The second stage building line 300 comprises at least one transfer device 307, e.g. a shuttle, dedicated to the first portion 305a of the second stage operating section 305 in order to move each auxiliary drum 302 between one or more of the work stations of the first portion 305a. Preferably the transfer device 307 is configured for supporting each auxiliary drum 302 and for imparting a building motion thereto (rotary motion and/or axial translation motion).

Preferably the transfer device 307 is configured for moving one of the M auxiliary drums 302 at a time along the first portion 305a of the second stage operating section 305.

The transfer device 307 is for example attained by means of a shuttle capable of being moved - moved by a suitable motor, along suitable guides 308 (preferably rectilinear) in two opposite travel directions, and of imparting a building motion (rotary motion and/or axial translation motion) to the auxiliary drum 302.

Preferably second stage work station/stations arranged along the first portion 305a of the second stage operating section 305 comprises/comprise a semi-finished product dispensing device 309. Second stage work station/stations arranged along the first portion 305a of the second stage operating section 305 is/are arranged to form the first part of components of the outer sleeve being processed 304 by depositing semi-finished products. The only exception is the work station 306c configured for the application of a reinforcement layer (belt layer at 0 degrees) which generally operates by spiralling a rubber-covered cord or more preferably a rubber-covered "strip-like element" comprising multiple rubber-covered cords, in substance a continuous elongated element "braced" with at least two cords.

The aforesaid semi-finished products are preferably made of elastomeric material reinforced with cords made of textile and/or metallic and/or hybrid material. Such cords are preferably arranged parallel to each other and oriented with a certain angle with respect to the longitudinal extension of the semi-finished product.

Preferably the second stage building line 300 comprises a transfer device 310a, 310b and 310c, operatively interposed between the first portion 305a of the second stage operating section 305 and a second portion 305b of the second stage operating section 305.

Preferably the transfer device 310a, 310b and 310c, is configured for transferring sequentially, one at a time, the M auxiliary drums 302 exiting from the first portion 305a of the second stage operating section 305 to the second portion 305b of the second stage operating section 305.

The transfer device 310a, 310b and 310c can comprise a rotating support 310a configured for cooperating with the transfer device 307, a Cartesian handling device 310b and/or a translating support 310c.

A second part of components of the outer sleeve being processed 304 comprises at least the tread band, preferably also at least one portion of sidewalls, in such case at least the radially outer portion of sidewalls of the tyre, and/or an underlayer. Preferably the second part of components of the outer sleeve being processed 304 comprises the non-"braced" components, i.e. only made of elastomeric material.

The second part of components is built along the second portion 305b of the second stage operating section 305. In other words, at least the work station 306e configured for the application of the tread band and preferably also the work station 306d configured for the application of an underlayer and/or the work station 306f configured for the application of at least one portion of sidewalls is arranged along the second portion 305b of the second stage operating section 305.

The M building drums which progressively exit from the first portion 305a of the second stage operating section 305 are moved along the second portion 305b of the second stage operating section 305.

Each auxiliary drum 302 can be moved between the work stations of the second portion 305b of the second stage operating section 305 in a sequence equal to or different from the spatial sequence of such work stations.

The second stage work stations arranged along the second portion 305b of the second stage operating section 305 are arranged to form, on each auxiliary drum 302, the second part of components of the outer sleeve being processed 304, according to predefined manufacturing instructions. In particular each auxiliary drum 302 is preferably moved between the second stage work stations arranged along the second portion 305b of the second stage operating section 305 according to a sequence defined by the reference specifications that can be programmed/configured for each outer sleeve being processed.

Preferably second stage work station/stations arranged along the second portion 305b of the second stage operating section 305 comprises/comprise a device for dispensing a continuous elongated element 312, preferably an extruder. Second stage work station/stations arranged along the second portion 305b of the second stage operating section 305 is/are arranged to form the second part of components of the outer sleeve being processed 304 by spiralling. Preferably, at least one second stage work station arranged along the second portion 305b of the second stage operating section 305 is provided with two or more devices for dispensing a continuous elongated element 312 so as to allow selecting the type of continuous elongated element to be dispensed, depending on the predefined manufacturing instructions for the outer sleeve being processed.

Preferably, the continuous elongated element 312 is only made of elastomeric material.

More preferably, in the case of co-extrusion, there can be at least two types of material forming the continuous elongated element 312.

Preferably the second stage building line 300 comprises a plurality of transfer devices 313a, 313b and 313c, in order to move the M building drums 302 between the work stations of the second portion 305b of the second stage operating section 305 and 314a, 314b, dedicated to the final part of the second portion 305b and of the second stage operating section 205.

One or more transfer devices 313a, 313b and 313c are configured both for moving the auxiliary drums 302 along the second portion 305b of the second stage operating section 305, and for supporting them during the spiralling of the continuous elongated element thereon and for imparting a building motion (rotary motion and axial translation motion) to the auxiliary drums 302. In particular three transfer devices 313a, 313b and 313c are provided, respectively associated with the work station 306d configured for the application of an underlayer, with the work station 306e configured for the application of the tread band and with the work station 306f configured for the application of at least one portion of sidewalls.

For example, each transfer device 313a, 313b is attained by means of an anthropomorphic robot, preferably with a robotic arm with at least 6 movement axes.

One or more transfer devices 310b, 314a, 314b are only used in the movement of the auxiliary drums 302 along the second portion 305b of the second stage operating section 305, and/or in the final part of said second stage operating section 305. Preferably, such transfer devices 310b, 314a, 314b comprise a translating support 314a and/or a fixed or rotating support 314b and/or a Cartesian handling device, e.g. the Cartesian handling device 310b.

According to a possible embodiment, illustrated in the figures, the second stage operating section 305 terminates at the gripping ring 400.

A transfer device, for example the Cartesian handling device 310b and/or the rotating support 310a, closes the closed second-stage path 301, bringing back to an initial position the auxiliary drum 302, uncoupled from the outer sleeve being processed 304.

The shaping machine 500 comprises a mandrel 501 arranged coaxial with the gripping ring 400 along a shaping axis 502.

Preferably the shaping machine 500 comprises a rectilinear guide 503 parallel to the shaping axis 502 and the mandrel 501 is axially movable along this in approaching the gripping ring 400 and in being removed from the gripping ring 400. Preferably the gripping ring 400 is arranged at one end of the rectilinear guide 503.

The gripping ring 400 is adapted to receive a first outer sleeve being processed 304a. A shaping drum 504 of the mandrel 501 is adapted to receive a first carcass sleeve being processed 204a.

In accordance with a possible embodiment, the mandrel 501 is stably associated with the shaping drum 504 and receives the first carcass sleeve being processed 204a uncoupled from the respective building drum 202. In other words the shaping drum 504 is structurally separated from the building drum 202. In this case, the first stage operating section 205 terminates outside the shaping machine 500.

Alternatively, the mandrel 501 is configured for receiving a building drum 202 associated with the first carcass sleeve being processed 204a. In this case the building drum 202 is attained as a "single-stage" drum and is adapted to operate as a shaping drum 504 in the shaping machine 500. In this case the first stage operating section 205 continues within the shaping machine 500.

Reference number 505 indicates a handling device for unloading the green tyre from the shaping machine 500.

The rolling station 600 for example comprises one or more rolling rollers 601.

The operation of the plant 100 implements a method for building tyres for vehicle wheels in accordance with the following description.

The aforesaid method provides for moving N building drums 202 along the closed first-stage path 201 and for moving N carcass sleeves being processed 204 along the open first-stage path 203 which terminates at the gripping ring 400.

Along the first stage operating section 205, each carcass sleeve being processed 204 is built and moved on a respective building drum 202, starting from the position in which a first component of the carcass sleeve being processed 204 is built, or a first part thereof is built, on the respective building drum 202.

The first part of components of the carcass sleeve being processed 204 is built by depositing semi-finished products along the first portion 205a of the first stage operating section 205.

In a position arranged between the first portion 205a and a second portion 205b of the first stage operating section 205, a bead building action is executed by engaging axially opposite ends of a carcass sleeve being processed 204 with respective annular anchoring structures.

Subsequently the second part of components of the carcass sleeve being processed 204 is built by spiralling a continuous elongated element along the second portion 205b of the first stage operating section 205.

The aforesaid method also provides for moving M auxiliary drums 302 along the closed second-stage path 301 and for moving M outer sleeves being processed 304 along the open second-stage path 303 which terminates at the gripping ring 400.

Along the second stage operating section 305, each outer sleeve being processed 304 is built and moved on a respective auxiliary drum 302, starting from the position in which a first component of the outer sleeve being processed 304 is built, or a first part thereof is built, on the respective auxiliary drum 302.

The first part of components of the outer sleeve being processed 304 is built by depositing semi-finished products along the first portion 305a of the second stage operating section 305.

Subsequently the second part of components of an outer sleeve being processed 304 is built by spiralling a continuous elongated element along the second portion 305b of the second stage operating section 305.

At the end of the second stage operating section 305, a first outer sleeve being processed 304a of the M outer sleeves being processed 304 is separated from the respective auxiliary drum 302 and at the end of the open second-stage path 303, the first outer sleeve being processed 304a is held by the gripping ring 400.

Preferably the first outer sleeve being processed 304a is separated from the respective auxiliary drum 302 by means of the gripping ring 400 so that the second stage operating section 305 terminates at the gripping ring 400. In this case, in order to separate the first outer sleeve being processed 304a from the respective auxiliary drum 302, provision is made for axially moving the auxiliary drum 302 carrying the first outer sleeve being processed 304a and inserting it in the gripping ring 400 at a first access 400a of the gripping ring itself until reaching a radially inner position with respect to the gripping ring 400.

Subsequently provision is made for holding the first outer sleeve being processed 304a by means of the gripping ring 400 while the auxiliary drum 302 is radially contacted and subsequently axially withdrawn from the first outer sleeve being processed 304a. During the withdrawal, the auxiliary drum 302 free of the first outer sleeve being processed 304a is moved axially according to a sense that is opposite with respect to that with which it was inserted.

At the end of the open first-stage path 203, a first carcass sleeve being processed 204a of the N carcass sleeves being processed 204 is arranged in a coaxial and radially inner position with respect to the first outer sleeve being processed held by said gripping ring 400.

In accordance with one possible embodiment, the first carcass sleeve being processed 204a is separated from the respective building drum 202 outside of the shaping machine 500 and fit on the shaping drum 504. In this case, the first stage operating section 205 terminates in the position in which the first carcass sleeve being processed 204a is separated from the respective building drum 202. The final section 203a of the open first-stage path 203, ending at the gripping ring 400, is arranged within the shaping machine 500. The first carcass sleeve is moved axially along the final section 203a associated with the shaping drum 504 until it is arranged in a coaxial and radially inner position with respect to the first outer sleeve being processed 304a held by the gripping ring 400.

In accordance with a different embodiment, in which the building drum 202 is a "single-stage" drum, the first carcass sleeve being processed 204a is inserted in the shaping machine 500 with the respective building drum which thus performs the shaping drum 504 functions. In this case the first stage operating section 205 terminates at the gripping ring 400. The final section 203a of the open first-stage path 203, ending at the gripping ring 400, is arranged within the shaping machine 500. The first carcass sleeve is moved axially along the final section 203a associated with the shaping drum (building drum 202) until it is arranged in a coaxial and radially inner position with respect to the first outer sleeve being processed 304a held by the gripping ring 400.

In order to arrange the first carcass sleeve being processed 204a in a coaxial and radially inner position with respect to the first outer sleeve being processed 304a, provision is made for axially moving the first carcass sleeve being processed 204a and inserting it in the gripping ring 400 at a second access 400b of the gripping ring itself that is axially opposite with respect to the first access 400a. In particular the first carcass sleeve being processed 204a is moved axially associated with the shaping drum 504 until it is inserted in the gripping ring 400 at the second access 400b.

The aforesaid method also provides for shaping, within the gripping ring 400, the first carcass sleeve being processed 204a assembling it with the first outer sleeve being processed 304a. Following the insertion of the first carcass sleeve being processed 204a in a coaxial and radially inner position with respect to the first outer sleeve being processed 304a, the gripping ring 1 is adapted to carry out radially outer contrast function during the shaping of the carcass sleeve. In other words, the gripping ring 1 opposes the radial expansion of the first carcass sleeve in its coupling with the first outer sleeve held by the gripping ring itself.

In this manner, a first green tyre being processed 506 is obtained.

Preferably provision is made for monitoring the force exerted on the gripping ring 400 by first carcass sleeve being processed 204a and by the first outer sleeve being processed 304a during the shaping of the first carcass sleeve being processed 204a.

At the end of the shaping, the shaping drum 504 carrying the first green tyre being processed 506 is removed from the gripping ring 400 by moving it along a finishing path 509. On the first green tyre being processed 506 associated with the shaping drum 504, a rolling action in the rolling station 600 is executed, arranged along the finishing path 507.

The finishing path 507 is arranged inside the shaping machine 500.

At the end of the rolling, the first green tyre being processed 506 is again arranged at the gripping ring 400. A closed finishing path 507, that starts and ends at the gripping ring 400, thus follows.

The gripping ring 400 externally grips the first green tyre being processed 506 and holds it while the shaping drum 504 is again moved away. In this manner, the first green tyre being processed 506 is separated from the shaping drum 504 at the end of the finishing path 507. Preferably provision is made for performing a quality check of the first green tyre being processed 506 by means of the gripping ring 400, preferably while the gripping ring 400 grips the first green tyre being processed 506.

Finally, the first green tyre being processed 506 is removed from the shaping machine 500 and from said gripping ring 400 at the end of the finishing path 507.

## Claims

1. Method for building tyres for vehicle wheels, comprising:
- moving a plurality of building drums (202) along a closed first-stage path (201),
- moving a plurality of carcass sleeves being processed (204) along an open first-stage path (203), wherein along a first stage operating section (205) in common between said closed first-stage path (201) and said open first-stage path (203) each carcass sleeve being processed (204) of said plurality of carcass sleeves being processed (204) is built on a respective building drum (202) of said plurality of building drums (202), said open first-stage path (203) ending at a gripping ring (400) arranged in a fixed reference position,
- moving a plurality of auxiliary drums (302) along a closed second-stage path (301), and **characterised by**
- moving a plurality of outer sleeves being processed (304) along an open second-stage path (303), wherein along a second stage operating section (305) in common between said closed second-stage path (301) and said open second-stage path (303) each outer sleeve being processed (304) of said plurality of outer sleeves being processed (304) is built and moved on a respective auxiliary drum (302) of said plurality of auxiliary drums (302), said open second-stage path (303) ending at said gripping ring (400),
- at the end of the second stage operating section (305), separating from the respective auxiliary drum (302) a first outer sleeve being processed (304a) of said plurality of outer sleeves being processed (304) and holding said first outer sleeve being processed by means of said gripping ring (400),
- at the end of the open first-stage path (203), arranging a first carcass sleeve being processed (204a) of said plurality of carcass sleeves being processed (204) in a coaxial and radially inner position with respect to the first outer sleeve being processed (304a) held by said gripping ring (400),
- shaping, inside the gripping ring (400), said first carcass sleeve being processed (204a), assembling it with said first outer sleeve being processed (304a) to obtain a first green tyre being processed.

2. Method for building tyres for vehicle wheels according to claim 1, wherein said gripping ring (400) performs a radially outer contrast function during the shaping of the first carcass sleeve being processed (204a).

3. Method for building tyres for vehicle wheels according to claims 1 or 2, comprising monitoring the force exerted on the gripping ring (400) by the first carcass sleeve being processed (204a) and the first outer sleeve being processed (304a) during the shaping of the first carcass sleeve being processed (204a).

4. Method for building tyres for vehicle wheels according to one or more of the preceding claims, wherein said open first-stage path (203) comprises a final section (203a) arranged inside a shaping machine (500) and ending at said gripping ring (400), and wherein said first carcass sleeve being processed (204a) is moved axially along said final section (203a) associated with a shaping drum (504) until it is arranged in a coaxial and radially inner position with respect to the first outer sleeve being processed (304a) held by said gripping ring (400).

5. Method for building tyres for vehicle wheels according to claim 4, comprising:
- removing said shaping drum (504) carrying said first green tyre being processed (506) from said gripping ring (400) by moving it along a finishing path (507),
- performing a rolling action of said first green tyre being processed (506) associated with said shaping drum (504) in a rolling station (600) arranged along said finishing path (507), and comprising again arranging said first green tyre being processed (506) at said gripping ring (400), after said rolling action, whereby said finishing path (507) is a closed path which starts and ends at said gripping ring (400).

6. Method for building tyres for vehicle wheels according to claim 5, comprising separating said first green tyre being processed (506) from the shaping drum (504) at the end of the finishing path (507), holding said first green tyre being processed (506) by means of said gripping ring (400), and comprising carrying out a quality check of said first green tyre being processed (506) by means of said gripping ring (400).

7. Method for building tyres for vehicle wheels according to claim 6, wherein said finishing path (507) is arranged inside said shaping machine (500).

8. Method for building tyres for vehicle wheels according to one or more of the preceding claims, wherein the action of separating said first outer sleeve being processed (304a) from the respective auxiliary drum (302) is carried out by said gripping ring (400) whereby said second stage operating section (305) ends at said gripping ring (400).

9. Method for building tyres for vehicle wheels according to claim 8, wherein separating said first outer sleeve being processed (304a) from the respective auxiliary drum (302) comprises:
- axially moving the auxiliary drum (302) carrying the first outer sleeve being processed (304a) and inserting it in the gripping ring (400) at a first access (400a) of the gripping ring itself until reaching a position radially inside the gripping ring (400),
- holding said first outer sleeve being processed (304a) by means of said gripping ring (400) while the auxiliary drum (302) is axially withdrawn from the first outer sleeve being processed (304a),
wherein arranging said first carcass sleeve being processed (204a) in a coaxial and radially inner position with respect to the first outer sleeve being processed (304a) comprises axially moving said first carcass sleeve being processed (204a) and inserting it into the gripping ring (400) at a second access (400b) of the gripping ring axially opposite to said first access (400a).

10. Method for building tyres for vehicle wheels according to any one of the preceding claims, comprising:
- building, by depositing semi-finished products, a first part of components of a carcass sleeve being processed (204) along a first portion (205a) of said first stage operating section (205), said first part of components comprising at least one carcass ply (4a, 4b),
- building, by spiralling a continuous elongated element, a second part of components of a carcass sleeve being processed (204) along a second portion (205b) of said first stage operating section (205), said second part of components comprising at least one between anti-abrasive inserts and at least a portion of sidewalls (11),
- performing a bead building action in a position arranged between said first portion (205a) and said second portion (205b) of the first stage operating section (205), wherein said bead building action comprises engaging axially opposite ends of a carcass sleeve being processed (204) to respective annular anchoring structures.

11. Method for building tyres for vehicle wheels according to any one of the preceding claims, comprising:
- building, by depositing semi-finished products, a first part of components of an outer sleeve being processed (304) along a first portion (305a) of the second stage operating section (305), said first part of components comprising at least one belt layer (8a, 8b),
- building, by spiralling a continuous elongated element, a second part of components of an outer sleeve being processed (304) along a second portion (305b) of the second stage operating section (305), said second part of components comprising at least one tread band (9).

12. Method for building tyres for vehicle wheels according to any one of the preceding claims, wherein along said first stage operating section (205) in common between said closed first-stage path (201) and said open first-stage path (203), each carcass sleeve being processed (204) of said plurality of carcass sleeves being processed is moved on a respective building drum (202) of said plurality of building drums.

13. Plant for building tyres for vehicle wheels, comprising:
- a first stage building line (200) defining a closed first-stage path (201) for moving a plurality of building drums (202) and an open first-stage path (203) for building and moving carcass sleeves being processed (204), wherein said closed first-stage path (201) and said open first-stage path (203) have a first stage operating section (205) in common for building and moving each carcass sleeve being processed (204) of said plurality of carcass sleeves being processed (204) associated with a respective building drum (202) of said plurality of building drums (202) and wherein said first stage building line (200) comprises a plurality of first stage work stations (206a-206h) arranged along a portion of the first stage operating section (205),
- a second stage building line (300) defining a closed second-stage path (301) for moving a plurality of auxiliary drums (302) and an open second-stage path (303) for building and moving a plurality of outer sleeves being processed (304), wherein said closed second-stage path (301) and said open second-stage path (303) have a second stage operating section (305) in common for building and moving each outer sleeve being processed (304) of said plurality of outer sleeves being processed (304) associated with a respective auxiliary drum (302) of said plurality of auxiliary drums (302) and wherein said second stage building line (300) comprises a plurality of second stage work stations (306a-306f) arranged along a portion of the second stage operating section (305), and
- a gripping ring (400) arranged in a fixed reference position,
**characterised in that** said open second-stage path (303) and said open first stage path (203) end at said gripping ring (400) configured for the assembly of said first carcass sleeve being processed (204a) with a first outer sleeve being processed (304a).

14. Plant for building tyres for vehicle wheels according to claim 13, wherein
- at least a first stage work station (206a-206e) comprising a semi-finished product dispensing device (209) is arranged along a first portion (205a) of said first stage operating section (205) for building a first part of components of a carcass sleeve being processed (204), said first part of components comprising at least one carcass ply (4a, 4b),
- at least a first stage work station (206g-206h) comprising a device for dispensing a continuous elongated element (212) is arranged along a second portion (205b) of said first stage operating section (205) for building a second part of components of a carcass sleeve being processed (204), said second part of components comprising at least one between anti-abrasive insert and at least a portion of sidewalls (11),- at least a second stage work station (306a-306e) comprising a semi-finished product dispensing device (309) is arranged along a first portion (305a) of said second stage operating section (305) for building a first part of components of the outer sleeve being processed, said first part of components comprising at least one belt layer (8a, 8b),
- at least a second stage work station (306d-306f) comprising a device for dispensing a continuous elongated element (312) is arranged along a second portion (305b) of said second stage operating section (305) for building a second part of components of the outer sleeve being processed, said second part of components comprising at least one tread band (9).

15. Plant for building tyres for vehicle wheels according to claim 13, wherein said gripping ring (400) is configured for carrying out radially outer contrast function during the shaping of a first carcass sleeve being processed (204a).

## Patentansprüche

1. Verfahren zur Fertigung von Reifen für Fahrzeugräder, umfassend:
- Bewegen einer Vielzahl von Fertigungstrommeln (202) entlang eines geschlossenen Erststufen-Pfads (201),
- Bewegen einer Vielzahl von in Bearbeitung befindlichen Karkassenhüllen (204) entlang eines offenen Erststufen-Pfads (203), wobei entlang eines Erststufen-Betriebsabschnitts (205), der dem geschlossenen Erststufen-Pfad (201) und dem offenen Erststufen-Pfad (203) gemeinsam ist, jede in Bearbeitung befindliche Karkassenhülle (204) der Vielzahl von in Bearbeitung befindlichen Karkassenhüllen (204) auf einer jeweiligen Fertigungstrommel (202) der Vielzahl von Fertigungstrommeln (202) gefertigt wird, wobei der offene Erststufen-Pfad (203) an einem Greifring (400) endet, der in einer fixen Referenzposition angeordnet ist,
- Bewegen einer Vielzahl von Hilfstrommeln (302) entlang eines geschlossenen Zweitstufen-Pfads (301), und **gekennzeichnet durch**
- Bewegen einer Vielzahl von in Bearbeitung befindlichen Außenhüllen (304) entlang eines offenen Zweitstufen-Pfads (303), wobei entlang eines Zweitstufen-Betriebsabschnitts (305), der dem geschlossenen Zweitstufen-Pfad (301) und dem offenen Zweitstufen-Pfad (303) gemeinsam ist, jede in Bearbeitung befindliche Außenhülle (304) der Vielzahl von in Bearbeitung befindlichen Außenhüllen (304) auf einer jeweiligen Hilfstrommel (302) der Vielzahl von Hilfstrommeln (302) gefertigt und bewegt wird, wobei der offene Zweitstufen-Pfad (303) an dem Greifring (400) endet,
- an dem Ende des Zweitstufen-Betriebsabschnitts (305), Trennen einer ersten in Bearbeitung befindlichen Außenhülle (304a) der Vielzahl von in Bearbeitung befindlichen Außenhüllen (304) von der jeweiligen Hilfstrommel (302) und Halten der ersten in Bearbeitung befindlichen Außenhülle mittels des Greifrings (400),
- an dem Ende des Erststufen-Betriebsabschnitts (203), Anordnen einer ersten in Bearbeitung befindlichen Karkassenhülle (204a) der Vielzahl von in Bearbeitung befindlichen Karkassenhülle (204) in einer koaxialen und radial inneren Position in Bezug auf die erste in Bearbeitung befindliche Außenhülle (304a), die von dem Greifring (400) gehalten wird,
- Formen der ersten in Bearbeitung befindlichen Karkassenhülle (204a) in dem Greifring (400), Zusammenbauen derselben mit der ersten in Bearbeitung befindlichen Außenhülle (304a), um einen ersten in Bearbeitung befindlichen Rohreifen zu erhalten.

2. Verfahren zur Fertigung von Reifen für Fahrzeugräder nach Anspruch 1, wobei der Greifring (400) während der Formung der ersten in Bearbeitung befindlichen Karkassenhülle (204a) eine radial äußere Kontrastfunktion ausführt.

3. Verfahren zur Fertigung von Reifen für Fahrzeugräder nach den Ansprüchen 1 oder 2, umfassend das Überwachen der Kraft, die auf den Greifring (400) durch die erste in Bearbeitung befindliche Karkassenhülle (204a) und die erste in Bearbeitung befindliche Außenhülle (304a)während der Formung der ersten in Bearbeitung befindlichen Karkassenhülle (204a) ausgeübt wird.

4. Verfahren zur Fertigung von Reifen für Fahrzeugräder nach einem oder mehreren der vorhergehenden Ansprüche, wobei der offene Erststufen-Pfad (203) einen finalen Abschnitt (203a) umfasst, der in einer Formungsmaschine (500) angeordnet ist und an dem Greifring (400) endet, und wobei die erste in Bearbeitung befindliche Karkassenhülle (204a) axial entlang des finalen Abschnitts (203a) in Zuordnung zu einer Formungstrommel (504) bewegt wird, bis sie in einer koaxialen und radial inneren Position in Bezug auf die erste in Bearbeitung befindliche Außenhülle (304a) angeordnet ist, die von dem Greifring (400) gehalten wird.

5. Verfahren zur Fertigung von Reifen für Fahrzeugräder nach Anspruch 4, umfassend:
- Entfernen der Formungstrommel (504), die den ersten in Bearbeitung befindlichen Rohreifen (506) trägt, von dem Greifring (400), indem sie entlang eines Fertigstellungs-Pfads (507) bewegt wird,
- Durchführen eines Rollvorgangs des ersten in Bearbeitung befindlichen Rohreifens (506) in Zuordnung zu der Formungstrommel (504) in einer Rollstation (600), die entlang des Fertigstellungs-Pfads (507) angeordnet ist, und umfassend das erneute Anordnen des in Bearbeitung befindlichen ersten Rohreifens (506) an dem Greifring (400) nach dem Rollvorgang, wobei der Fertigstellungs-Pfad (507) ein geschlossener Pfad ist, der an dem Greifring (400) beginnt und endet.

6. Verfahren zur Fertigung von Reifen für Fahrzeugräder nach Anspruch 5, umfassend das Trennen des ersten in Bearbeitung befindlichen Rohreifens (506) von der Formungstrommel (504) an dem Ende des Fertigstellungs-Pfads (507), das Halten des ersten in Bearbeitung befindlichen Rohreifens (506) mittels des Greifrings (400), und umfassend das Ausführen einer Qualitätsprüfung des ersten in Bearbeitung befindlichen Rohreifens (506) mittels des Greifrings (400).

7. Verfahren zur Fertigung von Reifen für Fahrzeugräder nach Anspruch 6, wobei der Fertigstellungs-Pfad (507) innerhalb der Formungsmaschine (500) angeordnet ist.

8. Verfahren zur Fertigung von Reifen für Fahrzeugräder nach einem oder mehreren der vorhergehenden Ansprüche, wobei der Vorgang des Trennens der ersten in Bearbeitung befindlichen Außenhülle (304a) von der jeweiligen Hilfstrommel (302) durch den Greifring (400) ausgeführt wird, wodurch der Zweitstufen-Betriebsabschnitt (305) an dem Greifring (400) endet.

9. Verfahren zur Fertigung von Reifen für Fahrzeugräder nach Anspruch 8, wobei das Trennen der ersten in Bearbeitung befindlichen Außenhülle (304a) von der jeweiligen Hilfstrommel (302) umfasst:
- axiales Bewegen der Hilfstrommel (302), welche die erste in Bearbeitung befindliche Außenhülle (304a) trägt, und Einsetzen derselben in den Greifring (400) an einem ersten Zugang (400a) des Greifrings selbst, bis sie eine Position radial innerhalb des Greifrings (400) erreicht,
- Halten der ersten in Bearbeitung befindlichen Außenhülle (304a) mittels des Greifrings (400), während die Hilfstrommel (302) axial von der ersten in Bearbeitung befindlichen Außenhülle (304a) zurückgezogen wird,
wobei das Anordnen der ersten in Bearbeitung befindlichen Karkassenhülle (204a) in einer koaxialen und radial inneren Position in Bezug auf die erste in Bearbeitung befindliche Außenhülle (304a) das axiale Bewegen der ersten in Bearbeitung befindlichen Karkassenhülle (204a) und das Einsetzen derselben in den Greifring (400) an einem zweiten Zugang (400b) des Greifrings, der dem ersten Zugang (400a) axial gegenüberliegt, umfasst.

10. Verfahren zur Fertigung von Reifen für Fahrzeugräder nach einem der vorhergehenden Ansprüche, umfassend:
- Fertigen, durch Ablegen von halbfertigen Produkten, eines ersten Teils von Komponenten einer in Bearbeitung befindlichen Karkassenhülle (204) entlang eines ersten Abschnitts (205a) des Erststufen-Betriebsabschnitts (205), wobei der erste Teil von Komponenten zumindest eine Karkassenlage (4a, 4b) umfasst,
- Fertigen, durch spiralförmiges Wickeln eines durchgehenden länglichen Elements, eines zweiten Teils von Komponenten einer in Bearbeitung befindlichen Karkassenhülle (204) entlang eines zweiten Abschnitts (205b) des Erststufen-Betriebsabschnitts (205), wobei der zweite Teil von Komponenten zumindest eines von abriebfesten Einsätzen und zumindest einem Abschnitt von Seitenwänden (11) umfasst,
- Durchführen eines Wulstfertigungsvorgangs in einer Position, die zwischen dem ersten Abschnitt (205a) und dem zweiten Abschnitt (205b) des Erststufen-Betriebsabschnitts (205) angeordnet ist, wobei der Wulstfertigungsvorgang das Ineingriffbringen axial gegenüberliegender Enden einer in Bearbeitung befindlichen Karkassenhülle (204) mit jeweiligen ringförmigen Verankerungsstrukturen umfasst.

11. Verfahren zur Fertigung von Reifen für Fahrzeugräder nach einem der vorhergehenden Ansprüche, umfassend:
- Fertigen, durch Ablegen von halbfertigen Produkten, eines ersten Teils von Komponenten einer in Bearbeitung befindlichen Außenhülle (304) entlang eines ersten Abschnitts (305a) des Zweitstufen-Betriebsabschnitts (305), wobei der erste Teil von Komponenten zumindest eine Gürtellage (8a, 8b) umfasst,
- Fertigen, durch spiralförmiges Wickeln eines durchgehenden länglichen Elements, eines zweiten Teils von Komponenten einer in Bearbeitung befindlichen Außenhülle (304) entlang eines zweiten Abschnitts (305b) des Zweitstufen-Betriebsabschnitts (305), wobei der zweite Teil von Komponenten zumindest einen Laufflächenring (9) umfasst,

12. Verfahren zur Fertigung von Reifen für Fahrzeugräder nach einem der vorhergehenden Ansprüche, wobei entlang des Erststufen-Betriebsabschnitts (205), der dem geschlossenen Erststufen-Pfad (201) und dem offenen Erststufen-Pfad (203) gemeinsam ist, jede in Bearbeitung befindliche Karkassenhülle (204) der Vielzahl von in Bearbeitung befindlichen Karkassenhüllen auf einer jeweiligen Fertigungstrommel (202) der Vielzahl von Fertigungstrommeln bewegt wird.

13. Anlage zur Fertigung von Reifen für Fahrzeugräder, umfassend:
- eine Erststufen-Fertigungslinie (200), die einen geschlossenen Erststufen-Pfad (201) zum Bewegen einer Vielzahl von Fertigungstrommeln (202) und einen offenen Erststufen-Pfad (203) zum Fertigen und Bewegen von in Bearbeitung befindlichen Karkassenhüllen (204) definiert, wobei der geschlossene Erststufen-Pfad (201) und der offene Erststufen-Pfad (203) einen Erststufen-Betriebsabschnitt (205) zum Fertigen und Bewegen jeder in Bearbeitung befindlichen Karkassenhülle (204) der Vielzahl von in Bearbeitung befindlichen Karkassenhüllen (204) in Zuordnung zu einer jeweiligen Fertigungstrommel (202) der Vielzahl von Fertigungstrommeln (202) gemeinsam haben, und wobei die Erststufen-Fertigungslinie (200) eine Vielzahl von Erststufen-Arbeitsstationen (206a-206h) umfasst, die entlang eines Abschnitts des Erststufen-Betriebsabschnitts (205) angeordnet sind,
- eine Zweitstufen-Fertigungslinie (300), die einen geschlossenen Zweitstufen-Pfad (301) zum Bewegen einer Vielzahl von Hilfstrommeln (302) und einen offenen Zweitstufen-Pfad (303) zum Fertigen und Bewegen einer Vielzahl von in Bearbeitung befindlichen Außenhüllen (304) definiert, wobei der geschlossene Zweitstufen-Pfad (301) und der offene Zweitstufen-Pfad (303) einen Zweitstufen-Betriebsabschnitt (305) zum Fertigen und Bewegen jeder in Bearbeitung befindlichen Außenhülle (304) der Vielzahl von in Bearbeitung befindlichen Außenhüllen (304) in Zuordnung zu einer jeweiligen Hilfstrommel (302) der Vielzahl von Hilfstrommeln (302) gemeinsam haben, und wobei die Zweitstufen-Fertigungslinie (300) eine Vielzahl von Zweitstufen-Arbeitsstationen (306a-306f) umfasst, die entlang eines Abschnitts des Zweitstufen-Betriebsabschnitts (305) angeordnet sind, und
- einen Greifring (400), der in einer fixen Referenzposition angeordnet ist,
**dadurch gekennzeichnet, dass** der offene Zweitstufen-Pfad (303) und der offene Erststufen-Pfad (203) an dem Greifring (400) enden, der für den Zusammenbau der ersten in Bearbeitung befindlichen Karkassenhülle (204a) mit einer ersten in Bearbeitung befindlichen Außenhülle (304a) ausgestaltet ist.

14. Anlage zur Fertigung von Reifen für Fahrzeugräder nach Anspruch 13, umfassend
- zumindest eine Erststufen-Arbeitsstation (206a-206e) umfassend eine Ausgabevorrichtung (209) für ein halbfertiges Produkt, entlang eines ersten Abschnitts (205a) des Erststufen-Betriebsabschnitts (205) angeordnet, zum Fertigen eines ersten Teils von Komponenten einer in Bearbeitung befindliche Karkassenhülle (204), wobei der erste Teil von Komponenten zumindest eine Karkassenlage (4a, 4b) umfasst,
- zumindest eine Erststufen-Arbeitsstation (206g-206h) umfassend eine Einrichtung zum Ausgeben eines durchgehenden länglichen Elements (212), entlang eines zweiten Abschnitts (205b) des Erststufen-Betriebsabschnitts (205) angeordnet, zum Fertigen eines zweiten Teils von Komponenten einer in Bearbeitung befindlichen Karkassenhülle (204), wobei der zweite Teil von Komponenten zumindest eines von abriebfesten Einsätzen und zumindest einem Abschnitt von Seitenwänden (11) umfasst,-zumindest eine Zweitstufen-Arbeitsstation (306a-306e) umfassend eine Ausgabevorrichtung (309) für ein halbfertiges Produkt, entlang eines ersten Abschnitts (305a) des Zweitstufen-Betriebsabschnitts (305) angeordnet, zum Fertigen eines ersten Teils von Komponenten der in Bearbeitung befindlichen Außenhülle, wobei der erste Teil von Komponenten zumindest eine Gürtellage (8a, 8b) umfasst,
- zumindest eine Zweitstufen-Arbeitsstation (306d-306f) umfassend eine Einrichtung zum Ausgeben eines durchgehenden länglichen Elements (312), entlang eines zweiten Abschnitts (305b) des Zweitstufen-Betriebsabschnitts (305) angeordnet, zum Fertigen eines zweiten Teils der in Bearbeitung befindlichen Außenhülle, wobei der zweite Teil von Komponenten zumindest einen Laufflächenring (9) umfasst.

15. Anlage zur Fertigung von Reifen für Fahrzeugräder nach Anspruch 13, wobei der Greifring (400) dazu ausgestaltet ist, während der Formung einer ersten in Bearbeitung befindlichen Karkassenhülle (204a) eine radial äußere Kontrastfunktion auszuführen.

## Revendications

1. Procédé de construction de pneus pour roues de véhicule comprenant :
- le déplacement d'une pluralité de tambours de construction (202) le long d'un chemin de premier étage fermé (201),
- le déplacement d'une pluralité de manchons de carcasse en cours de traitement (204) le long d'un chemin de premier étage ouvert (203), dans lequel le long d'une section de fonctionnement de premier étage (205) en commun entre ledit chemin de premier étage fermé (201) et ledit chemin de premier étage ouvert (203) chaque manchon de carcasse en cours de traitement (204) de ladite pluralité de manchons de carcasse en cours de traitement (204) est construit sur un tambour de construction respectif (202) de ladite pluralité de tambours de construction (202), ledit chemin de premier étage ouvert (203) se terminant au niveau d'une bague de retenue (400) agencée dans une position de référence fixe,
- le déplacement d'une pluralité de tambours auxiliaires (302) le long d'un chemin de deuxième étage fermé (301), et **caractérisé par**
- le déplacement d'une pluralité de manchons extérieurs en cours de traitement (304) le long d'un chemin de deuxième étage ouvert (303), dans lequel le long d'une section de fonctionnement de deuxième étage (305) en commun entre ledit chemin de deuxième étage fermé (301) et ledit chemin de deuxième étage ouvert (303) chaque manchon extérieur en cours de traitement (304) de ladite pluralité de manchons extérieurs en cours de traitement (304) est construit et déplacé sur un tambour auxiliaire respectif (302) de ladite pluralité de tambours auxiliaires (302), ledit chemin de deuxième étage ouvert (303) se terminant au niveau de ladite bague de retenue (400),
- à l'extrémité de la section de fonctionnement de deuxième étage (305), la séparation du tambour auxiliaire respectif (302) d'un premier manchon extérieur en cours de traitement (304a) de ladite pluralité de manchons extérieurs en cours de traitement (304) et le maintien dudit premier manchon extérieur en cours de traitement au moyen de ladite bague de retenue (400),
- à l'extrémité du chemin de premier étage ouvert (203), l'agencement d'un premier manchon de carcasse en cours de traitement (204a) de ladite pluralité de manchons de carcasse en cours de traitement (204) dans une position coaxiale et radialement intérieure par rapport au premier manchon extérieur en cours de traitement (304a) maintenu par ladite bague de retenue (400),
- la mise en forme, à l'intérieur de la bague de retenue (400), dudit premier manchon de carcasse en cours de traitement (204a), son assemblage avec ledit premier manchon extérieur en cours de traitement (304a) pour obtenir un premier pneu cru en cours de traitement.

2. Procédé de construction de pneus pour roues de véhicule selon la revendication 1, dans lequel ladite bague de retenue (400) assure une fonction de contraste radialement extérieur lors de la mise en forme du premier manchon de carcasse en cours de traitement (204a).

3. Procédé de construction de pneus pour roues de véhicule selon les revendications 1 ou 2, comprenant la surveillance de la force exercée sur la bague de retenue (400) par le premier manchon de carcasse en cours de traitement (204a) et le premier manchon extérieur en cours de traitement (304a) lors de la mise en forme du premier manchon de carcasse en cours de traitement (204a).

4. Procédé de construction de pneus pour roues de véhicule selon une ou plusieurs des revendications précédentes, dans lequel ledit chemin de premier étage ouvert (203) comprend une section finale (203a) agencée à l'intérieur d'une machine de mise en forme (500) et se terminant au niveau de ladite bague de retenue (400), et dans lequel ledit premier manchon de carcasse en cours de traitement (204a) est déplacé axialement le long de ladite section finale (203a) associée à un tambour de mise en forme (504) jusqu'à ce qu'il soit agencé dans une position coaxiale et radialement intérieure par rapport au premier manchon extérieur en cours de traitement (304a) maintenu par ladite bague de retenue (400).

5. Procédé de construction de pneus pour roues de véhicule selon la revendication 4, comprenant :
- le retrait dudit tambour de mise en forme (504) portant ledit premier pneu cru en cours de traitement (506) de ladite bague de retenue (400) en le déplaçant le long d'un chemin de finition (507),
- la réalisation d'une action de roulage dudit premier pneu cru en cours de traitement (506) associé audit tambour de mise en forme (504) dans un poste de roulage (600) agencé le long dudit chemin de finition (507), et comprenant à nouveau l'agencement dudit premier pneu cru en cours de traitement (506) au niveau de ladite bague de retenue (400), après ladite action de roulage, de sorte que ledit chemin de finition (507) soit un chemin fermé qui commence et se termine au niveau de ladite bague de retenue (400).

6. Procédé de construction de pneus pour roues de véhicule selon la revendication 5, comprenant la séparation dudit premier pneu cru en cours de traitement (506) du tambour de mise en forme (504) à l'extrémité du chemin de finition (507), le maintien dudit premier pneu cru en cours de traitement (506) au moyen de ladite bague de retenue (400), et comprenant la réalisation d'un contrôle de qualité dudit premier pneu cru en cours de traitement (506) au moyen de ladite bague de retenue (400).

7. Procédé de construction de pneus pour roues de véhicule selon la revendication 6, dans lequel ledit chemin de finition (507) est agencé à l'intérieur de ladite machine de mise en forme (500).

8. Procédé de construction de pneus pour roues de véhicule selon une ou plusieurs des revendications précédentes, dans lequel l'action de séparation dudit premier manchon extérieur en cours de traitement (304a) du tambour auxiliaire respectif (302) est réalisée par ladite bague de retenue (400) de sorte que ladite section de fonctionnement de deuxième étage (305) se termine au niveau de ladite bague de retenue (400).

9. Procédé de construction de pneus pour roues de véhicule selon la revendication 8, dans lequel la séparation dudit premier manchon extérieur en cours de traitement (304a) du tambour auxiliaire respectif (302) comprend :
- le déplacement axial du tambour auxiliaire (302) portant le premier manchon extérieur en cours de traitement (304a) et son insertion dans la bague de retenue (400) au niveau d'un premier accès (400a) de la bague de retenue elle-même jusqu'à atteindre une position radialement à l'intérieur de la bague de retenue (400),
- le maintien dudit premier manchon extérieur en cours de traitement (304a) au moyen de ladite bague de retenue (400) tandis que le tambour auxiliaire (302) est retiré axialement du premier manchon extérieur en cours de traitement (304a),
dans lequel l'agencement dudit premier manchon de carcasse en cours de traitement (204a) dans une position coaxiale et radialement intérieure par rapport au premier manchon extérieur en cours de traitement (304a) comprend le déplacement axial dudit premier manchon de carcasse en cours de traitement (204a) et son insertion dans la bague de retenue (400) au niveau d'un deuxième accès (400b) de la bague de retenue axialement opposé audit premier accès (400a).

10. Procédé de construction de pneus pour roues de véhicule selon l'une quelconque des revendications précédentes, comprenant :
- la construction, en déposant des produits semi-finis, d'une première partie de composants d'un manchon de carcasse en cours de traitement (204) le long d'une première portion (205a) de ladite section de fonctionnement de premier étage (205), ladite première partie de composants comprenant au moins un pli de carcasse (4a, 4b),
- la construction, en enroulant en spirale un élément allongé continu, d'une deuxième partie de composants d'un manchon de carcasse en cours de traitement (204) le long d'une deuxième portion (205b) de ladite section de fonctionnement de premier étage (205), ladite deuxième partie de composants comprenant au moins l'un parmi des inserts anti-abrasifs et au moins une portion de flancs (11),
- la réalisation d'une action de construction de talon dans une position agencée entre ladite première portion (205a) et ladite deuxième portion (205b) de la section de fonctionnement de premier étage (205), où ladite action de construction de talon comprend la mise en prise d'extrémités axialement opposées d'un manchon de carcasse en cours de traitement (204) avec des structures d'ancrage annulaires respectives.

11. Procédé de construction de pneus pour roues de véhicule selon l'une quelconque des revendications précédentes, comprenant :
- la construction, en déposant des produits semi-finis, d'une première partie de composants d'un manchon extérieur en cours de traitement (304) le long d'une première portion (305a) de la section de fonctionnement de deuxième étage (305), ladite première partie de composants comprenant au moins une couche de ceinture (8a, 8b),
- la construction, en enroulant en spirale un élément allongé continu, d'une deuxième partie de composants d'un manchon extérieur en cours de traitement (304) le long d'une deuxième portion (305b) de la section de fonctionnement de deuxième étage (305), ladite deuxième partie de composants comprenant au moins une bande de roulement (9).

12. Procédé de construction de pneus pour roues de véhicule selon l'une quelconque des revendications précédentes, dans lequel le long de ladite section de fonctionnement de premier étage (205) en commun entre ledit chemin de premier étage fermé (201) et ledit chemin de premier étage ouvert (203), chaque manchon de carcasse en cours de traitement (204) de ladite pluralité de manchons de carcasse en cours de traitement est déplacé sur un tambour de construction respectif (202) de ladite pluralité de tambours de construction.

13. Installation de construction de pneus pour roues de véhicules, comprenant :
- une ligne de construction de premier étage (200) définissant un chemin de premier étage fermé (201) pour déplacer une pluralité de tambours de construction (202) et un chemin de premier étage ouvert (203) pour construire et déplacer des manchons de carcasse en cours de traitement (204), dans lequel ledit chemin de premier étage fermé (201) et ledit chemin de premier étage ouvert (203) ont une section de fonctionnement de premier étage (205) en commun pour construire et déplacer chaque manchon de carcasse en cours de traitement (204) de ladite pluralité de manchons de carcasse en cours de traitement (204) associé à un tambour de construction respectif (202) de ladite pluralité de tambours de construction (202) et où ladite ligne de construction de premier étage (200) comprend une pluralité de postes de travail de premier étage (206a-206h) agencés le long d'une portion de la section de fonctionnement de premier étage (205),
- une ligne de construction de deuxième étage (300) définissant un chemin de deuxième étage fermé (301) pour déplacer une pluralité de tambours auxiliaires (302) et un chemin de deuxième étage ouvert (303) pour construire et déplacer une pluralité de manchons extérieurs en cours de traitement (304) , où ledit chemin de deuxième étage fermé (301) et ledit chemin de deuxième étage ouvert (303) ont une section de fonctionnement de deuxième étage (305) en commun pour construire et déplacer chaque manchon extérieur en cours de traitement (304) de ladite pluralité de manchons extérieurs en cours de traitement (304) associé à un tambour auxiliaire respectif (302) de ladite pluralité de tambours auxiliaires (302) et où ladite ligne de construction de deuxième étage (300) comprend une pluralité de postes de travail de deuxième étage (306a-306f) agencés le long d'une portion de la section de fonctionnement de deuxième étage (305), et
- un bague de retenue (400) agencée dans une position de référence fixe,
**caractérisée en ce que** ledit chemin de deuxième étage ouvert (303) et ledit chemin de premier étage ouvert (203) se terminent au niveau de ladite bague de retenue (400) configurée pour l'assemblage dudit premier manchon de carcasse en cours de traitement (204a) avec un premier manchon extérieur en cours de traitement (304a).

14. Installation de construction de pneus pour roues de véhicule selon la revendication 13, dans laquelle
- au moins un poste de travail de premier étage (206a-206e) comprenant un dispositif de distribution de produit semi-fini (209) est agencé le long d'une première portion (205a) de ladite section de fonctionnement de premier étage (205) pour construire une première partie de composants d'un manchon de carcasse en cours de traitement (204), ladite première partie de composants comprenant au moins un pli de carcasse (4a, 4b),
- au moins un poste de travail de premier étage (206g-206h) comprenant un dispositif de distribution d'un élément allongé continu (212) est agencé le long d'une deuxième portion (205b) de ladite section de fonctionnement de premier étage (205) pour construire une deuxième partie de composants d'un manchon de carcasse en cours de traitement (204), ladite deuxième partie de composants comprenant au moins l'un parmi un insert anti-abrasif et au moins une portion de flancs (11),
- au moins un poste de travail de deuxième étage (306a-306e) comprenant un dispositif de distribution de produit semi-fini (309) est agencé le long d'une première portion (305a) de ladite section de fonctionnement de deuxième étage (305) pour construire une première partie de composants du manchon extérieur en cours de traitement, ladite première partie de composants comprenant au moins une couche de ceinture (8a, 8b),
- au moins un poste de travail de deuxième étage (306d-306f) comprenant un dispositif de distribution d'un élément allongé continu (312) est agencé le long d'une deuxième portion (305b) de ladite section de fonctionnement de deuxième étage (305) pour construire une deuxième partie de composants du manchon extérieur en cours de traitement, ladite deuxième partie de composants comprenant au moins une bande de roulement (9).

15. Installation de construction de pneus pour roues de véhicule selon la revendication 13, dans lequel ladite bague de retenue (400) est configurée pour réaliser une fonction de contraste radialement extérieur pendant la mise en forme d'un premier manchon de carcasse en cours de traitement (204a).
